(19) Europäisches Patentamt
European Patent Office
Office européen des brevets

(11) Publication number: **0 119 471 B1**

(12) # EUROPEAN PATENT SPECIFICATION

(45) Date of publication of patent specification: **16.03.94**

(51) Int. Cl.5: **C08L 75/04**, C08K 5/09, B29C 33/60

(21) Application number: **84101575.3**

(22) Date of filing: **16.02.84**

The file contains technical information submitted after the application was filed and not included in this specification

(54) **An active hydrogen-containing composition which provides mold release properties to a molded article, and a process for preparing molded polymeric products from the active hydrogen-containing composition.**

(30) Priority: **16.02.83 US 466826**

(43) Date of publication of application:
**26.09.84 Bulletin 84/39**

(45) Publication of the grant of the patent:
**16.03.94 Bulletin 94/11**

(84) Designated Contracting States:
**BE DE FR IT NL SE**

(56) References cited:
**EP-A- 33 498**
**EP-A- 69 286**
**EP-A- 81 701**
**EP-A- 102 007**
**DE-A- 3 224 206**
**US-A- 4 089 822**
**US-A- 4 111 861**
**US-A- 4 296 212**
**US-A- 4 324 867**

(73) Proprietor: **THE DOW CHEMICAL COMPANY**
**2030 Dow Center**
**Abbott Road**
**P.O. Box 1967**
**Midland Michigan 48640-1967(US)**

(72) Inventor: **Meyer, Louis W.**
**103 Aster Lane**
**Lake Jackson Texas(US)**
Inventor: **Vanderhider, James A.**
**26 Sugar Mill Lane**
**Brazoria Texas(US)**
Inventor: **Carswell, Robert**
**306 Narcissus**
**Lake Jackson Texas(US)**

(74) Representative: **Weickmann, Heinrich, Dipl.-Ing. et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08**
**20**
**D-81635 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

The present invention pertains to an active hydrogen-containing composition which provides mold release properties to a molded article and a process for preparing molded polymeric products from the active hydrogen-containing composition.

Polyether polyurethane moldings are being increasingly used in the manufacture of automobiles, furniture and in home construction. Molded polyether polyurethanes are especially important because they are lightweight and are resistant to moisture, weather, temperature extremes, and aging. As an illustration, molded polyether polyurethane elastomers have become of special interest in the manufacture of force-reducing impact media such as safety impact bumpers for automotive vehicles and impact resistant automotive fascia.

The high demand for molded polyether polyurethane articles requires that they be produced in the largest numbers in the shortest possible time. Polyurethane-forming mixtures are eminently suited for mass production because the reactants are liquid, that is they are pumpable, and are quick-reacting. The problem has existed, however, in providing adequate mold release in the shortest possible time to take fullest advantage of the unique capabilities of the polyurethane systems.

Heretofore, release of molded articles from molds in which they have been formed has been achieved by coating the surface of the mold cavity with an agent which facilitates release of the molded article from the walls of the mold cavity. Procedures such as this are described in U.S. Pat. Nos. 3,694,530, 3,640,769, 3,624,190, 3,607,397 and 3,413,390. This method has certain disadvantages. The agent, after molding, adheres to the surface of the molded article thereby removing such from the surface of the mold. As the mold release agent is removed from the mold surface, it must therefore be replaced so as to provide continued release of the molded articles from the mold. The necessity for repeated additions of mold release agent results in higher costs due to low productivity as a result of the additional time incurred in applying such additional quantities of mold release agents to the mold surfaces.

In addition, mold build-up may become a problem, since a fine film of urethane is left in spot areas of the mold surface. This build-up on the surface of the mold cavity walls eventually covers and obscures any detail on the mold cavity surface desired to be imparted to the molded article. Also, the presence of the release agent adhering to the surface of the molded article can impede subsequent operations on the article, such as painting or adhering operations.

Additionally, the need to reapply the release agent after each molding or a limited number of moldings interrupts the molding operation and slows down output.

The use of internal mold release agents for use in molding polyurethane articles has been disclosed by Boden et al in U.S. 3,726,952, Godlewski in U.S. 4,024,088, Bonin et al in U.S. 4,098,731, Sparrow et al in U.S. 4,130,698, Godlewski in U.S. 4,111,861, Kleimann et al in U.S. 4,201,847 and Godlewski in U.S. 4,220,727.

Some of these internal mold release agents bleed or creep to the surface of the molded article. Some of these articles can not be painted even after appropriate preparation steps for painting has been done. Others are incompatible with polyether polyols. Most of them seriously reduce the activity of the catalyst. Almost all show degradation of physical properties such as reduced elongation.

The use of the "salts" described in U.S. Patent 3,726,952 has not provided effective release agents for reaction injection molding (RIM). While showing release characteristics per se, their use in a screening program wherein hand mixed formulations are cast into an open mold has been found to have other serious problems, namely: (1) degradation of the tin catalyst employed in the formulation, (2) excessively long gel and cure time, and (3) poor physical properties. These problems are believed to be caused by the presence of free carboxylic acid. It is released from the salt by the reaction of the amine with the isocyanate, and it is believed that the presence of these free carboxylic acids, or any acid, interferes with the cure rate of the hydroxyl-isocyanate reaction to form a urethane structure as disclosed in J. Polymer Science, Polymer Chemistry Edition, Vol. 19, 381-388 (1981) John Wiley & Son, Inc.

The reactivity or catalyst kill problem can be overcome to a certain degree by using tertiary amines in place of primary or secondary amines. Both U.S. Patents 3,726,952 and 4,098,731 describe this technique. Since isocyanates cannot react with tertiary amines the salt cannot be split; it thus remains neutral (the carboxylic acid is not free), hence, catalyst kill does not seem evident. The use of tertiary amines, however, often shows bleed out or exudation problems which in turn result in poor paint adhesion. Further, retention of physical properties is seldom possible because of either excess reactivity when using very catalytically active amines, or because of plasticizer effects brought about by excessively long tertiary amine molecules.

The technology of U.S. Patent 4,111,861 states that polar metal compounds can be employed to overcome catalyst kill problems brought on by the presence of fatty carboxylic acids. It states that metal

ions must be present in an amount sufficient to neutralize the acid. Reference is made to the use of the Bi, Pb, Na, Li, and K ion, with sodium carbonate, sodium oleate, and potassium laurate being exemplified. They also show sodium oleate alone to be an effective release agent. When evaluated in RIM polyol systems as a single additive, it failed to show adequate release characteristics in a screening program wherein hand mixed formulations were cast into an open mold.

Dominquez et al. in U.S. Patent 4,396,729 teach a method of making a reaction injection molded elastomer by injecting two streams via a RIM machine into a molded cavity of the desired configuration. The first stream contains amine terminated polyethers of greater than 1500 molecular weight, an amine terminated chain extender and, as an internal mold release agent, a dimethyl siloxane with organic acid groups. The second stream contains an aromatic polyisocyanate.

Zinc stearate has long been known to be an effective release agent for most thermoplastics. It is also used in polyester sheet molding compounds. When evaluated in RIM polyol systems containing only hydroxyl groups as the active hydrogen-containing source, zinc stearate as a single additive failed to show adequate release characteristics in a screening program wherein hand mixed formulations were cast into an open mold. Zinc stearate was observed to dissolve in a mixture of oleoyl sarcosine and excess polyoxypropylene diamine of 400 MW and the resultant mixture performed as an effective mold release agent.

The present invention provides for an improvement in one or more of the following: (1) increased multiple release, (2) increased ease of release, (3) effective and very stable catalyst reactivity, and (4) minimally altered physical properties in molded parts.

One aspect of the present invention pertains to an active hydrogen-containing composition which provides mold release properties to a molded article prepared from the composition and a polyisocyanate, a polyisothiocyanate or a mixture thereof by a RIM process. The invention is characterized in that the composition consists of

(A) a lithium, copper, magnesium, calcium, barium, zinc, iron, cobalt or nickel salt of a carboxylic acid containing at least one terminal or pendant saturated or unsaturated hydrocarbon group having from 8 to 22 carbon atoms when said material contains an amido group or from 10 to 22 carbon atoms when said material does not contain an amido group, and

(B) an aminated polyether containing primary and/or secondary amine groups or a mixture thereof with at least one other active hydrogen-containing material containing either hydroxyl groups, primary amine groups, secondary amine groups or mixtures of such groups wherein all or a portion of the hydroxyl or amine groups may be replaced with -SH groups, and, if desired,

(C) an amido-containing carboxylic acid represented by the formula

R-C(O)-N(R')-R''-C(O)-OH

wherein R is a hydrocarbon or substituted hydrocarbon group having from 1 to 29 carbon atoms, R' is hydrogen or an alkyl group or hydroxyl-substituted alkyl group having from 1 to 3 carbon atoms and R'' is a divalent hydrocarbon group having from 1 to 3 carbon atoms, and, if desired,

(D) further non-active hydrogen-containing components selected from conventional catalysts other than (A), coloring agents, fire retardant agents, fillers, modifiers, cell control agents or/and blowing agents wherein (i) the weight ratio of component (A) to component (B) is from 0.004:1 to 0.05:1, and (ii) the weight ratio of that portion of component (B) containing primary and/or secondary amine groups to component (A) is at least 2:1 and (iii) the reaction mixture is devoid of a polymer or co-polymer of one or more olefinically unsaturated monomers, having a molecular weight of from 200 to 50,000.

Another aspect of the present invention pertains to a process for preparing molded polymeric products which comprises mixing and injecting into a suitable mold a polyisocyanate, a polyisothiocyanate or a mixture thereof as the "A-side" component and an active hydrogen-containing composition as the "B-side" component characterized by employing as the "B-side" component the aforementioned active hydrogen-containing composition.

The term polymer as employed herein means those polymers containing urea and optionally urethane groups.

By the term lipophilic as employed herein it is meant that the material contains an R-$CH_3$ group wherein R is a saturated or unsaturated aliphatic hydrocarbon group having at least 6 carbon atoms.

Any reference herein to the Periodic Table of the Elements refers to that published by Sargent-Welch Scientific Company as catalog number S-18806, 1968.

Suitable carboxylic acids and the metal salts thereof, components (C) and (A), respectively, useful in the active hydrogen-containing composition are materials according to the definition in claim 1.

Particularly suitable carboxylic acids include, for example, oleic acid, lauric acid, palmitic acid, stearic acid, and mixtures thereof.

Suitable carboxylic acids for component (C) are amido-containing carboxylic acids represented by the general formula

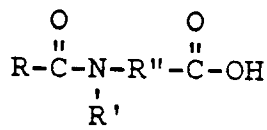

wherein R is a hydrocarbon or substituted hydrocarbon group having from 1 to 29, preferably from 2 to 17, carbon atoms; R' is hydrogen, an alkyl or hydroxyl substituted alkyl group having from 1 to 3 carbon atoms and R" is a divalent hydrocarbon group having from 1 to 3, preferably 1, carbon atoms, such as, for example, oleoyl sarcosine, lauryl sarcosine, capryl sarcosine, oleoyl glycine, octanol glycine, oleoyl hydroxyethyl glycine, and mixtures thereof. These amido carboxylic acids can be prepared by the Schotten-Baumann acylation reaction wherein an acyl halide is reacted with an amino acid.

Component (A) and preferably component (C), when present, contains at least one terminal or pendant saturated or unsaturated hydrocarbon group having from 8 to 22 carbon atoms when said material contains an amido group or from 10 to 22 carbon atoms when said material does not contain an amido group.

Suitable metal salts of carboxylic acids are those wherein the metal is selected from lithium, copper, magnesium, calcium, barium, zinc, iron, cobalt or nickel or combinations thereof. Particularly suitable metal salts of carboxylic acids or amido carboxylic acids include, for example, zinc stearate, zinc oleate, zinc palmitate, zinc laurate, calcium stearate, calcium oleate, calcium palmitate, calcium laurate, magnesium stearate, magnesium oleate, magnesium laurate, magnesium palmitate, nickel stearate, nickel oleate, nickel palmitate, nickel laurate, copper stearate, copper oleate, copper laurate, copper palmitate, zinc stearoyl sarcosinate, zinc oleoyl sarcosinate, zinc palmitoyl sarcosinate, zinc lauroyl sarcosinate, calcium stearoyl sarcosinate, calcium oleoyl sarcosinate, calcium palmitoyl sarcosinate, calcium lauroyl sarcosinate, magnesium stearoyl sarcosinate, magnesium oleoyl sarcosinate, magnesium palmitoyl sarcosinate, magnesium lauroyl sarcosinate, nickel stearoyl sarcosinate, nickel oleoyl sarcosinate, nickel palmitoyl sarcosinate, nickel lauroyl sarcosinate, copper stearoyl sarcosinate, copper oleoyl sarcosinate, copper palmitoyl sarcosinate, copper lauroyl sarcosinate or mixtures thereof.

The metal salts described hereinbefore can be prepared by reacting such acids or amido acids with the appropriate quantity of a compound containing the metal such as a hydroxide or if the metal is above hydrogen in the electromotive series, it can be reacted directly with the acid or acid amide.

Also, mixtures of the acids and metal salts of the acids which are available commercially can be employed when partially reacted, complexed or associated materials are desired. Likewise commercially available metal salts of the acids or amido acids can be employed when the totally reacted, complexed or associated materials are desired.

In some instances the quality of the metal salt of a carboxylic acid or metal salt of an amido-containing carboxylic acid may affect the performance of the composition. This is believed to be particularly true with the use of zinc stearate in urethane reaction injection molding systems.

Suitable amines which can be employed herein as component (B) in the active hydrogen-containing composition or in the internal mold release composition include aliphatic, cycloaliphatic, or aromatic compounds containing at least one primary or secondary amine group with those compounds having at least two primary and/or secondary amine groups being especially preferred.

Suitable amine compounds include, for example, oleyl amine, coco amine, tall oil amine, ethanolamine, diethylenetriamine, ethylenediamine, propanolamine, aniline, and mixtures thereof.

Suitable materials which optionally can be employed in component (B) of the active hydrogen-containing composition are relatively high equivalent weight hydroxyl-, primary amine- or secondary amine-containing materials which include, for example, those hydroxyl and/or amine materials having an average hydrogen functionality of from 2 to 8, preferably from 2 to 4 and an average total hydrogen equivalent weight of from 500 to 5000, preferably from 1000 to 3000.

For purposes of the present invention, the total hydrogen equivalent weight is determined by dividing the molecular weight of any material by all of the hydrogen atoms derived from hydroxyl, primary amine, secondary amine and thiol groups, regardless of whether or not the group reacts with an NCO or NCS group when preparing molded articles.

Suitable relatively high equivalent weight hydroxyl-containing polyols which can be employed herein include, for example, those polyether and polyester polyols which have an average hydroxyl functionality of from 2 to 8, preferably from 2 to 4 and most preferably from 2 to 3 and an average hydroxyl equivalent weight of from 500 to 5000, preferably from 1000 to 3000 and most preferably from 1500 to 2500, including mixtures thereof.

Suitable relatively high equivalent weight polyether polyols which can be employed herein include those which are prepared by reacting an alkylene oxide, halogen substituted or aromatic substituted alkylene oxides or mixtures thereof with an active hydrogen-containing initiator compound.

Suitable such oxides include, for example, tetrahydrofuran, ethylene oxide, propylene oxide, 1,2-butylene oxide, 2,3-butylene oxide, styrene oxide, epichlorohydrin, epibromohydrin, or mixtures thereof.

Suitable initiator compounds include, for example, water, ethylene glycol, propylene glycol, butanediol, hexanediol, glycerine, trimethylol propane, pentaerythritol, hexanetriol, sorbitol, sucrose, hydroquinone, resorcinol, catechol, bisphenols, novolac resins, phosphoric acid, or mixtures thereof.

Other suitable initiators for the relatively high equivalent weight polyols include, for example, ammonia, ethylenediamine, diaminopropanes, diaminobutanes, diaminopentanes, diaminohexanes, diethylenetriamine, triethylenetetramine, tetraethylenepentamine, pentaethylenehexamine, ethanolamine, aminoethylethanolamine, aniline, 2,4-toluenediamine, 2,6-toluenediamine, diaminodiphenyloxide (oxydianiline), 2,4'-diamino-diphenylmethane, 4,4'-diaminodiphenylmethane, 1,3-phenylenediamine, 1,4-phenylenediamine, naphthylene-1,5-diamine, triphenylmethane-4,4',4''-triamine, 4,4'-di(methylamino)-diphenylmethane, 1-methyl-2-methylamino-4-aminobenzene, 1,3-diethyl-2,4-diaminobenzene, 2,4-diaminomesitylene, 1-methyl-3,5-diethyl-2,4-diaminobenzene, 1-methyl-3,5-diethyl-2,6-diaminobenzene, 1,3,5-triethyl-2,6-diaminobenzene, 3,5,3',5'-tetraethyl-4,4'-diaminodiphenylmethane and amine aldehyde condensation products such as the polyphenyl-polymethylene polyamines produced from aniline and formaldehyde, or mixtures thereof.

Suitable polyester polyols which may be employed herein include, for example, those prepared by reacting a polycarboxylic acid or anhydride thereof with a polyhydric alcohol. The polycarboxylic acids may be aliphatic, cycloaliphatic, aromatic and/or heterocyclic and may be substituted (e.g. with halogen atom) and/or unsaturated. Examples of carboxylic acids of this kind include succinic acid; adipic acid; suberic acid; azelaic acid; sebacic acid; phthalic acid; isophthalic acid; trimellitic acid; phthalic acid anhydride; tetrahydrophthalic acid anhydride; hexahydrophthalic acid anhydride; tetrachlorophthalic acid anhydride; endomethylene tetrahydrophthalic acid anhydride; glutaric acid anhydride; maleic acid; maleic acid anhydride; fumaric acid; dimeric and trimeric fatty acids; such as oleic acid, which may be in admixture with monomeric fatty acids, terephthalic acid dimethyl ester and terephthalic acid bisglycol ester. Mixtures of such acids or anhydrides may also be employed.

Examples of suitable polyhydric alcohols include ethylene glycol, 1,2-propylene glycol; 1,3-propylene glycol; 1,4-, 1,2- and 2,3-butylene glycol; 1,6-hexane diol; 1,8-octane diol; neopentyl glycol; cyclohexane dimethanol (1,4-bis-hydroxymethyl cyclohexane) 2-methyl-1,3-propane diol; glycerol; trimethylol propane; 1,2,6-hexane triol; 1,2,4-butane triol; trimethylol ethane; pentaerythritol; quinitol; mannitol; sorbitol; methyl glycoside; diethylene glycol; triethylene glycol; tetraethylene glycol; polyethylene glycol; dipropylene glycol; polypropylene glycols; dibutylene glycol; or polybutylene glycols. The polyesters may contain some terminal carboxyl groups. It is also possible to use polyesters of lactones such as caprolactone, or hydroxy carboxylic acids such as hydroxy caproic acid.

Other suitable relatively high equivalent weight polyols which can be employed herein include polymer-containing polyols such as, for example, those disclosed in U.S. Patents RE 29,118 (Stamberger), RE 28,715 (Stamberger), RE 29,014 (Pizzini et al) and 3,869,413 (Blankenship et al), Hoffman in U.S. 4,394,491 and Hoffman et al. in U.S. 4,390,645.

Suitable materials which can be employed in component (B) of the active hydrogen-containing composition are the relatively high equivalent weight active hydrogen-containing materials resulting from aminating the polyether and polyester polyols described above. It is not necessary to totally aminate the polyols to be useful in these compositions. Preferably, at least 50 percent of the hydroxyl groups are replaced with amine groups.

Also suitable as the relatively high equivalent weight polyols are the thiol derivatives of the aforementioned polyols such that all or a portion of the hydroxyl or amine groups are replaced with -SH groups.

Other suitable materials which can be employed in component (B) of the active hydrogen-containing composition are relatively low equivalent weight active hydrogen-containing materials including one or more of any such materials containing either hydroxyl groups, primary amine groups, secondary amine groups or mixtures of such groups; such materials having an average active hydrogen functionality of from 2 to 16, preferably from 2 to 8 and an average active hydrogen equivalent weight of from 15 to 500, preferably from

32 to 200.

Suitable relatively low equivalent weight polyols which can be employed herein include, for example, ethylene glycol, propylene glycol, trimethylol propane, 1,4-butane diol, diethylene glycol, dipropylene glycol, bisphenols, hydroquinone, catechol, resorcinol, triethylene glycol, tetraethylene glycol, dicyclopentadienediethanol, glycerine, low molecular weight ethylene and/or propylene oxide derivatives of glycerine, ethylene diamine, diethylenetriamine or mixtures thereof.

Suitable relatively low equivalent weight amine-containing active hydrogen containing materials which can be employed herein include, for example, ethylene diamine, 1,3-diaminopropane, 1,4-diaminobutane, isophoronediamine, diethylenetriamine, ethanolamine, aminoethylethanolamine, diaminocyclohexane, hexamethylenediamine, methyliminobispropylamine, iminobispropylamine, bis(aminopropyl)piperazine, aminoethyl piperazine, 1,2-diaminocyclohexane, polyoxyalkyleneamines, bis-(p-aminocyclohexyl)methane, triethylenetetramine, tetraethylenepentamine or mixtures thereof.

Also suitable relatively low equivalent weight active hydrogen-containing materials are the aminated polyoxyalkylene glycols having an average amino hydrogen equivalent weight of from 60 to 110.

Suitable also as the relatively low equivalent weight active hydrogen-containing materials are the thiol derivatives of the aforementioned materials wherein at least one of the hydroxyl or amine groups has been replaced with an -SH group.

The term aliphatic amine as employed herein includes also the cycloaliphatic amines and heterocyclic aliphatic amines so long as they contain at least one primary or secondary amine group.

Suitable aromatic amines which can be employed herein as a relatively low molecular weight active hydrogen-containing material include, for example, 2,4-bis(p-aminobenzyl)aniline, 2,4-diaminotoluene, 2,6-diaminotoluene, 1,3-phenylenediamine, 1,4-phenylenediamine, 2,4'-diaminodiphenylmethane, 4,4'-diaminodiphenylmethane, naphthalene-1,5-diamine, triphenylmethane-4,4',4''-triamine, 4,4'-di-(methylamino)-diphenylmethane, 1-methyl-2-methylamino-4-aminobenzene, polyphenyl-polymethylene polyamines, 1,3-diethyl-2,4-diaminobenzene, 2,4-diaminomesitylene, 1-methyl-3,5-diethyl-2,4-diaminobenzene, 1-methyl-3,5-diethyl-2,6-diaminobenzene, 1,3,5-triethyl-2,6-diaminobenzene, 3,5,3',5'-tetraethyl-4,4'-diaminodiphenylmethane, 4,4'-methylene-bis(2,6-diisopropylaniline) or mixtures thereof.

Preferably component (B) comprises a primary amine groups and/or secondary amine groups containing alkylene polyamine or polyalkylene polyamine having an average molecular weight of at least 60, an aliphatic primary or secondary amine having from 6 to 22 carbon atoms, an aromatic or cycloaliphatic amine or polyamine which is hydrocarbyl substituted or halogen ring substituted containing from 6 to 22 carbon atoms, a heterocyclic amine or polyamine which is optionally hydrocarbyl substituted having from 4 to 22 carbon atoms, an alkanol amine or polyamine having from 2 to 22 carbon atoms, or a polyoxyalkylene amine or a mixture thereof.

Particularly suitable for component (B) of the compositions are the relatively low equivalent weight aliphatic amines and aromatic amines. Examples of such particularly suitable amines include the compounds of aminated polyoxyalkane glycols, hexamethylene diamine, diethylenetriamine, and hydrocarbyl substituted aromatic amines such as, for example, the diethyltoluenediamines.

Most preferably, component (B) of the internal mold release composition is a combination comprising an aminated polyoxypropylene glycol having an average molecular weight of 400 and a diethyltoluenediamine, such as 1-methyl-3,5-diethyl-2,4-diaminobenzene, 1-methyl-3,5-diethyl-2,6-diaminobenzene or mixtures thereof.

The active hydrogen-containing composition of this invention may be prepared by adding components (A), (B) and, optionally, (C) either separately or mixed together in any combination or sequence, directly to a suitable active hydrogen-containing material. For the active hydrogen-containing composition, the portion of component (B) containing primary amine groups and/or secondary amine groups and component (A) are present in a weight ratio of at least 2:1, preferably at least 3:1. Components (A) and (B) are employed in proportions such that the weight ratio of component (A) to component (B) is from

0.004:1 to 0.05:1. The weight ratio of all compounds containing primary amine and/or secondary amine groups to the total of component (B) is preferably from 0.002:1 to 1:1, more preferably from 0.003:1 to 1:1, and most preferably from 0.06:1 to 1:1. Component (C), when present, is employed in a proportion which provides a weight ratio of component (C) to component (B) of preferably up to 0.05:1, more preferably up to 0.025:1.

Suitable polyisocyanates include the organic aromatic polyisocyanates, aliphatic polyisocyanates or mixtures thereof.

Suitable organic aromatic polyisocyanates which can be employed herein include, for example, any polyisocyanate having 2 or more NCO groups per molecule such as, for example, 2,4-toluenediisocyanate, 2,6-toluenediisocyanate, p,p'-diphenylmethanediisocyanate, p-phenylenediisocyanate, naphthalenediisocyanate, polymethylene polyphenylisocyanates, or mixtures thereof.

Also suitable as organic aromatic and/or aliphatic polyisocyanates are the prepolymers prepared from such polyisocyanates and compounds having 2 or more active hydrogen atoms; as well as such polyisocyanates and/or prepolymers thereof which have been modified to contain uretonimine or carbodiimide linkages.

Suitable organic aliphatic polyisocyanates include, in addition to the hydrogenated derivatives of the above mentioned organic aromatic polyisocyanates, 1,6-hexamethylene diisocyanate, isophorone diisocyanate, 1,4-cyclohexyl diisocyanate, 1,4-bis-isocyanatomethylcyclohexane, or mixtures thereof.

Also suitable are the corresponding polyisothiocyanates.

The polymers can be prepared either in the presence or absence of a conventional catalyst other than (A). Those polymers prepared from amine containing polyols do not usually require a catalyst although catalysts can be employed if desired. On the other hand, those polymers prepared from polyols which do not contain nitrogen atoms are prepared in the presence of a catalyst.

Suitable catalysts which may be employed herein include, for example, tertiary amines, alkali metal alkoxides, or mixtures thereof.

Suitable amine catalysts include, for example, triethylenediamine, triethylamine, tetramethylbutanediamine, N,N-dimethylethanolamine, N-ethylmorpholine, bis-(2-dimethylaminoethyl)ether, N-methylmorpholine, N-ethylpiperidine, 1,3-bis-(dimethylamino)-2-propanol, N,N,N',N'-tetramethylethylenediamine, or mixtures thereof.

Suitable alkali metal alkoxides which can be employed as catalysts for urethane formation include, for example, sodium ethoxide, potassium ethoxide, sodium propoxide, potassium propoxide, sodium butoxide, potassium butoxide, lithium ethoxide, lithium propoxide, lithium butoxide, alkali metal salts of polyols such as described in U.S.P. 3,728,308, or mixtures thereof.

Preferably, these urethane catalysts are in liquid form, but if they are inherently a solid at the application temperature, then they may be dissolved in an appropriate liquid, such as, for example, dipropylene glycol or they may be dissolved or dispersed in one of the components.

The catalysts other than (A), when employed, can be employed in quantities of from 0.001 to 5, preferably from 0.01 to 1 part per 100 parts of total polyol employed depending upon the activity of the catalyst. Very weak catalysts could possibly be employed in quantities above 5 parts per 100 parts of polyol.

If desired, the polyurethanes can be modified so as to contain isocyananurate or thioisocyanurate groups by employing relatively high NCO or NCS to active hydrogen ratios, e.g. greater than 1.5:1, preferably greater than 2:1, and employing a trimerization catalyst. Suitable trimerization catalysts which can be employed herein include, for example, the zwitterions disclosed by Kresta and Shen in U.S. 4,111,914 and the tertiary amines, alkali metal salts of lower alkanoic acids, or mixtures thereof as disclosed in U.S. 4,126,741 (Carleton et al).

The zwitterions can also function as a catalyst for urethane formation, i.e. the NCX-OH reaction.

If desired, the densities of the polymers produced herein can be reduced by incorporating a blowing agent into the formulation. Suitable such blowing agents are fully described in U.S. 4,125,487 and in U.S. 3,753,933. Particularly suitable blowing agents include, for example, the low boiling halogenated hydrocarbons such as methylene chloride and trichloromonofluoromethane.

Another suitable method for reducing the density is by frothing by injecting an inert gas into the mixture of polymer forming components. Suitable such inert gases include, for example, nitrogen, oxygen, carbon dioxide, xenon, helium, or mixtures thereof such as air.

If desired, cell control agents can be employed, particularly when preparing foams or microcellular products of reduced density and/or to assist in paintability of the polyurethane. Suitable cell control agents which can be employed herein include silicone oils such as, for example, DC-193, DC-195, DC-197 and DC-198 commercially available from Dow Corning Corp.; SF-1034, PFA-1635, PFA-1700 and PFA-1660 commercially available from General Electric Co.; L-520, L-5320 and L-5340 commercially available from Union Carbide Corp.; and B-1048 commercially available from PH. Goldschmidt, AG., or mixtures thereof.

The polymeric products may additionally contain, if desired, coloring agents, fire retardant agents, fillers, or modifiers.

Suitable liquid and solid modifiers include those disclosed and described in U.S. Patents 4,000,105 and 4,154,716. However, any such modifier described therein which fulfills the definition of any of the other components as described in this application are not considered as modifiers but rather as one of the components of the present invention.

Particularly suitable as the modifier or filler substances are fiberglass reinforcement fibers, particularly those having lengths of from about 1/16 inch (1.6 mm) to about 1/2 inch (12.7 mm) and milled glass fibers

having a maximum length of 1/16 inch (1.6 mm), 1/8 inch (3.2 mm) and 1/4 inch (6.4 mm). Other particularly suitable fillers are mica and wollastonite.

The components which react to form the polymeric products can be shaped or formed into useful articles by injecting the reactive mixture into molds which are capable of withstanding the exotherm of the polymerizing mass and are non-reactive with and are insoluble when in contact with the liquid reactive mixture. Particularly suitable molds are those made of metal such as aluminum, copper, brass, or steel. In some instances non-metal molds can be employed such as those made of, for example, polyethylene, polypropylene, polyethylene terephthalate, or silicone elastomers.

Particularly suitable injection methods for RIM applications include those disclosed in a paper entitled "THE BAYFLEX 110 SERIES--THE NEW GENERATION OF RIM MATERIALS", by W. A. Ludwico and R. P. Taylor presented at the SOCIETY OF AUTOMOTIVE ENGINEERS PASSENGER CAR MEETING, Detroit, Michigan, September 26-30, 1977; a paper entitled "THE PROPERTIES OF HIGH MODULUS RIM URETHANES", by R. M. Gerkin and F. E. Critchfield presented at the above meeting; British Patent No. 1,534,258 titled "PROCESS FOR THE PRODUCTION OF ELASTOMERIC POLYURETHANE-POLYUREA MOULDED PRODUCTS HAVING A COMPACT SURFACE SKIN" and a book by F. Melvin Sweeney entitled INTRODUCTION TO REACTION INJECTION MOLDING, Technomics, Inc., 1979.

When injecting a relatively rapid-setting blend into massive metal molds, it may be necessary in order for the molded article to have good surface characteristics to preheat the molds to an appropriate temperature so that the mold will not abstract the heat of polymerization from the reactive mass and inappropriately delay the solidification time expected of a given formulation. On the other hand, thin wall metal molds could exhibit a minimal "heat sink" effect on relatively large cross section castings and thus, these thin wall metal molds may not require preheating.

Following is a list of materials employed in the examples and comparative experiments.

Polyol A is the reaction product of glycerine and propylene oxide at a molar ratio of 1 to 6 respectively and having an equivalent weight of 150.

Polyol B is the reaction product of Polyol A with propylene oxide and subsequently end-capped with ethylene oxide. The amount of ethylene oxide was 18% by weight of the total weight of the polyol. The hydroxyl equivalent weight is 1635. About 75% of the hydroxyl groups are primary hydroxyl groups.

Polyol C is ethylene glycol having an active hydrogen equivalent weight of 31.

Polyetheramine A is an aminated polyoxypropylene glycol represented by the formula

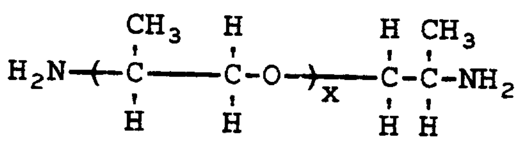

wherein x has a value of 5.6. This product has an average amine hydrogen equivalent weight of 100 and is commercially available from Texaco Chemical Co. as JEFFAMINE® D-400.

Polyetheramine B is an aminated polyoxypropylene glycol represented by the formula

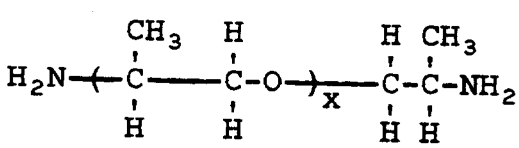

wherein x has a value of 33.1. This product has an average amine hydrogen equivalent weight of 500 and is commercially available from Texaco Chemical Company as JEFFAMINE® D-2000.

Polyetheramine C is a 5000 molecular weight polyoxypropylene triol which had been aminated to an extent of about 80% which is commmercially available from Texaco Chemical Co as JEFFAMINE T-5000.

Diamine A is an aromatic diamine consisting principally of diethyl toluene diamine. The material has an active hydrogen equivalent weight of 89 and is commercially available from Ethyl Corporation.

Catalyst A is an organometal catalyst commercially available from Witco Chemical Company as UL-28.

Catalyst B is a 33% solution of triethylenediamine in dipropylene glycol commercially available from Air Products Company as DABCO® 33LV.

Polyisocyanate A is a liquid, modified diphenylmethane diisocyanate containing carbodiimide linkages commercially available from Rubicon Chemicals, Inc. as RUBINATE® LF-168 or Upjohn Chemical Co. as

ISONATE® 143L. The average NCO equivalent weight is 143.

Polyisocyanate B is a liquid prepolymer prepared from reacting an excess of methylenediphenyldiisocyanate with tripropylene glycol commercially available from Rubicon Chemicals, Inc. as RUBINATE® LF 179. This polyisocyanate has an NCO equivalent weight of 182.

The following examples are illustrative of the present invention, but are not to be construed as to limiting the scope thereof in any manner.

General Procedure for Examples 1-40 and Comparative Runs A Through T

The reactive mixtures of each formulation were hand mixed with 0.05 parts of Catalyst A, in order to extend reactivity time and also to better separate reactivity differences between the various samples tested. These mixtures were then hand cast into a 4 in. x 12 in. x 1/2 in. (101.6 mm x 304.8 mm x 12.7 mm) container made from aluminum foil which had been washed with methylene chloride. After casting, the samples were cured for 60 seconds in an oven at 150°F (65.5°C). Upon removal from the oven attempts were made to pull the aluminum foil from the casting by peeling a 3 in. (76.2 mm) wide strip which was made by scoring with razor blades in the long direction of the molded parts. Ease of release was then judged and ranked according to the following scale:

| | |
|---|---|
| 8-10 Excellent release: | equates to a pull force of .01 to .33 pounds/in. (1.8 to 57.8 N/m) |
| 6-7 Marginal release: | equates to a pull force of 0.34 to 1.00 pounds/in. (59.5 to 175 N/m) |
| 1-5 Unacceptable release: | equates to pull force of about between >1.00 and 10.00 pounds/in. (>175 to 1751 N/m) |
| 0 Sticks: | release equals to 13.00 to 20.00 pounds/in. (2277 to 3503 N/m) |

Several original sample pulls were measured on a Instron machine and adjacent strips were pulled by hand. Once a feel for the ease of peel was established, the Instron comparison pulls were dropped and a subjective rating was given.

Reactivity was measured and identified by two separate points: (1) cream time and (2) cure time. Cream time is observed as the time at which the mixture of B side (active hydrogen-containing composition) plus A side (polyisocyanate) goes from liquid to cream, and cure time is observed as the time when the casting becomes tack free.

Examples 1 Through 38 and Comparative Runs A Through N

Following the general procedure, various polyurethane-forming compositions were prepared and molded. The components and results are provided in Table I.

TABLE I
Examples and Comparative Runs

| COMPONENT AND RESULTS | A | B | C | D | E | F | G | 1 | 2 | 3 |
|---|---|---|---|---|---|---|---|---|---|---|
| POLYOL B, pbw[1] | 100 | 100 | 100 | 100 | 100 | 100 | 92.5 | 92.5 | 92.5 | 92.5 |
| ahe[2] | 0.061 | 0.061 | 0.061 | 0.061 | 0.061 | 0.061 | 0.057 | 0.057 | 0.057 | 0.057 |
| POLYETHERAMINE A, | | | | | | | | | | |
| pbw[1] | -- | -- | -- | -- | -- | -- | 7.5 | 7.5 | 7.5 | 7.5 |
| ahe[2] | -- | -- | -- | -- | -- | -- | 0.075 | 0.075 | 0.075 | 0.075 |
| POLYOL C, pbw[1] | 18 | 18 | 18 | 18 | 18 | 18 | 18 | 18 | 18 | 18 |
| ahe[2] | 0.58 | 0.58 | 0.58 | 0.58 | 0.58 | 0.58 | 0.58 | 0.58 | 0.58 | 0.58 |
| OLEOYL SARCOSINE, | | | | | | | | | | |
| pbw[1] | 4 | 3 | 2 | 1 | --- | --- | 4 | 3 | 2 | 1 |
| equiv.[3] | 0.011 | 0.008 | 0.0057 | 0.0028 | --- | --- | 0.011 | 0.008 | 0.0057 | 0.0028 |
| ZINC STEARATE, pbw[1] | --- | 1 | 2 | 3 | 4 | --- | --- | 1 | 2 | 3 |
| POLYISOCYANATE A, | | | | | | | | | | |
| pbw[1] | 91.7 | 91.7 | 91.7 | 91.7 | 91.7 | 91.7 | 96.4 | 96.4 | 96.4 | 96.4 |
| equiv.[3] | 0.641 | 0.641 | 0.641 | 0.641 | 0.641 | 0.641 | 0.674 | 0.674 | 0.674 | 0.674 |
| REACTIVITY TIME | | | | | | | | | | |
| cream, sec. | 70 | 65 | 42 | 28 | 15 | 17 | 55 | 20 | 12 | 9 |
| cure, sec. | 120 | 75 | 50 | 32 | 20 | 25 | 60 | 25 | 20 | 13 |
| RELEASE VALUE | 5 | 6 | 7 | 6 | 0 | 0 | 8 | 9 | 9 | 9 |

TABLE I (cont.)
Examples and Comparative Runs

| COMPONENT AND RESULTS | H | I | 4 | 5 | 6 | 7 | 8 | 9 |
|---|---|---|---|---|---|---|---|---|
| POLYOL B, pbw[1] | 92.5 | 92.5 | 92.5 | 92.5 | 92.5 | 92.5 | 92.5 | 92.5 |
| ahe[2] | 0.057 | 0.057 | 0.057 | 0.057 | 0.057 | 0.057 | 0.057 | 0.057 |
| POLYETHERAMINE A, | | | | | | | | |
| pbw[1] | 7.5 | 7.5 | 7.5 | 7.5 | 7.5 | 7.5 | 7.5 | 7.5 |
| ahe[2] | 0.075 | 0.075 | 0.075 | 0.075 | 0.075 | 0.075 | 0.075 | 0.075 |
| POLYOL C, pbw[1] | 18 | 18 | 18 | 18 | 18 | 18 | 18 | 18 |
| ahe[2] | 0.58 | 0.58 | 0.58 | 0.58 | 0.58 | 0.58 | 0.58 | 0.58 |
| OLEIC ACID, pbw[1] | --- | 4 | 3 | 2 | --- | --- | --- | --- |
| equiv.[3] | --- | 0.014 | 0.011 | 0.007 | --- | --- | --- | --- |
| LAUROYL SARCOSINE, | | | | | | | | |
| pbw[1] | --- | --- | --- | --- | 3 | 2 | --- | --- |
| equiv.[3] | --- | --- | --- | --- | 0.011 | 0.007 | --- | --- |
| LAURIC ACID, pbw[1] | --- | --- | --- | --- | --- | --- | 3 | 2 |
| equiv.[3] | --- | --- | --- | --- | --- | --- | 0.015 | 0.01 |
| ZINC STEARATE, pbw[1] | --- | --- | 1 | 2 | 1 | 2 | 1 | 2 |
| POLYISOCYANATE A, | | | | | | | | |
| pbw[1] | 96.4 | 96.4 | 96.4 | 96.4 | 96.4 | 96.4 | 96.4 | 96.4 |
| equiv.[3] | 0.674 | 0.674 | 0.674 | 0.674 | 0.674 | 0.674 | 0.674 | 0.674 |
| REACTIVITY | | | | | | | | |
| cream, sec. | 12 | 57 | 25 | 20 | 21 | 12 | 21 | 19 |
| cure, sec. | 15 | 63 | 40 | 30 | 25 | 20 | 45 | 33 |
| RELEASE VALUE | 0 | 8 | 8 | 8 | 9 | 9 | 8 | 8 |

**TABLE I (cont.)**
Examples and Comparative Runs

| COMPONENT AND RESULTS | J | K | L | M |
|---|---|---|---|---|
| POLYOL B, pbw[1] | 100 | 100 | 100 | 100 |
| ahe[2] | 0.061 | 0.061 | 0.061 | 0.061 |
| POLYOL C, pbw[1] | 18 | 18 | 18 | 18 |
| ahe[2] | 0.58 | 0.58 | 0.58 | 0.58 |
| OLEIC ACID, pbw[1] | 4 | 3 | 2 | 1 |
| equiv.[3] | 0.014 | 0.011 | 0.007 | 0.004 |
| ZINC STEARATE, pbw[1] | --- | 1 | 2 | 3 |
| POLYISOCYANATE A, | | | | |
| pbw[1] | 91.7 | 91.7 | 91.7 | 91.7 |
| equiv.[3] | 0.641 | 0.641 | 0.641 | 0.641 |
| REACTIVITY | | | | |
| cream, sec. | 60 | 40 | 30 | 17 |
| cure, sec. | ∞ | 80 | 60 | 31 |
| RELEASE VALUE | 0 | 5 | 5 | 5 |

TABLE II
Examples and Comparative Runs

| COMPONENT AND RESULTS | | 10 | 11 | 12 | 13 | 14 | 15 |
|---|---|---|---|---|---|---|---|
| POLYOL B, | pbw[1] | 92.5 | 92.5 | 62.5 | 92.5 | 92.5 | 92.5 |
| | ahe[2] | 0.057 | 0.057 | 0.38 | 0.057 | 0.057 | 0.057 |
| POLYETHERAMINE A, | pbw[1] | 7.5 | 7.5 | --- | 7.5 | 7.5 | 7.5 |
| | ahe[2] | 0.075 | 0.075 | --- | 0.075 | 0.075 | 0.075 |
| POLYETHERAMINE B, | pbw[1] | --- | --- | 37.5 | --- | --- | --- |
| | ahe[2] | | | 0.075 | | | |
| POLYOL C, | pbw[1] | 18 | 30 | 30 | 30 | 30 | 30 |
| | ahe[2] | 0.58 | 0.967 | 0.967 | 0.967 | 0.967 | 0.967 |
| ZINC STEARATE, | pbw[1] | --- | 2 | 2 | 2 | 2 | 2 |
| ZINC ACETATE, | pbw[1] | 0.69 | --- | --- | --- | --- | --- |
| OLEOYL SARCOSINE, | pbw[1] | 2 | 2 | 2 | --- | --- | --- |
| | equiv.[3] | 0.0057 | 0.0057 | 0.0057 | --- | --- | --- |
| STEAROYL SARCOSINE, | pbw[1] | --- | --- | --- | 2 | --- | --- |
| | equiv.[3] | --- | --- | --- | 0.0057 | --- | --- |
| LAUROYL SARCOSINE, | pbw[1] | --- | --- | --- | --- | 2 | --- |
| | equiv.[3] | --- | --- | --- | --- | 0.007 | --- |
| OCTOYL SARCOSINE, | pbw[1] | --- | --- | --- | --- | --- | 2 |
| | equiv.[3] | --- | --- | --- | --- | --- | 0.01 |

TABLE II (cont.)
Examples and Comparative Runs

| COMPONENT AND RESULTS | | 10 | 11 | 12 | 13 | 14 | 15 |
|---|---|---|---|---|---|---|---|
| HEXOYL SARCOSINE, | pbw[1] | --- | --- | --- | --- | --- | --- |
| | equiv.[3] | --- | --- | --- | --- | --- | --- |
| POLYISOCYANATE A, | pbw[1] | 96.4 | 152 | 149 | 152 | 152 | 152 |
| | equiv.[3] | 0.674 | 1.063 | 1.042 | 1.063 | 1.063 | 1.063 |
| REACTIVITY TIME | | | | | | | |
| cream, sec. | | 9 | 7 | 7 | 9 | 8 | 12 |
| cure, sec. | | 12 | 12 | 11 | 14 | 13 | 17 |
| RELEASE VALUE | | 8 | 9 | 8 | 9 | 8 | 9 |

TABLE II (cont.)
Examples and Comparative Runs

| COMPONENT AND RESULTS | 16 | 17 | 18 | 19 | 20 | 21 | 22 |
|---|---|---|---|---|---|---|---|
| POLYOL B, pbw[1] | 92.5 | 92.5 | 92.5 | 92.5 | 92.5 | 92.5 | 92.5 |
| ahe[2] | 0.057 | 0.057 | 0.057 | 0.057 | 0.057 | 0.057 | 0.057 |
| POLYETHERAMINE A, pbw[1] | 7.5 | 7.5 | 7.5 | 7.5 | 7.5 | 7.5 | 7.5 |
| ahe[2] | 0.075 | 0.075 | 0.075 | 0.075 | 0.075 | 0.075 | 0.075 |
| POLYOL C, pbw[1] | 30 | 30 | 30 | 30 | 30 | 30 | 30 |
| ahe[2] | 0.967 | 0.967 | 0.967 | 0.967 | 0.967 | 0.967 | 0.967 |
| ZINC STEARATE, pbw[1] | 2 | 2 | 2 | 2 | 2 | 2 | 2 |
| HEXOYL SARCOSINE, pbw[1] | 2 | --- | --- | --- | --- | --- | --- |
| equiv.[3] | 0.011 | --- | --- | --- | --- | --- | --- |

**TABLE II (cont.)**
Examples and Comparative Runs

| COMPONENT AND RESULTS | 16 | 17 | 18 | 19 | 20 | 21 | 22 |
|---|---|---|---|---|---|---|---|
| BEHENIC ACID, pbw[1] | --- | 2 | --- | --- | --- | --- | --- |
| equiv.[3] | --- | 0.0059 | --- | --- | --- | --- | --- |
| STEARIC ACID, pbw[1] | --- | --- | 2 | --- | --- | --- | --- |
| equiv.[3] | --- | --- | 0.008 | --- | --- | --- | --- |
| OLEIC ACID, pbw[1] | --- | --- | --- | 2 | --- | --- | --- |
| equiv.[3] | --- | --- | --- | 0.008 | --- | --- | --- |
| ISOSTEARIC ACID, pbw[1] | --- | --- | --- | --- | 2 | --- | --- |
| equiv.[3] | --- | --- | --- | --- | 0.008 | --- | --- |
| BENZOIC ACID, pbw[1] | --- | --- | --- | --- | --- | 2 | --- |
| equiv.[3] | --- | --- | --- | --- | --- | 0.016 | --- |
| ACETIC ACID, pbw[1] | --- | --- | --- | --- | --- | --- | 0.33 |
| equiv.[3] | --- | --- | --- | --- | --- | --- | 0.0055 |
| POLYISOCYANATE A, pbw[1] | 152 | 152 | 152 | 152 | 152 | 152 | 152 |
| equiv.[3] | 1.063 | 1.063 | 1.063 | 1.063 | 1.063 | 1.063 | 1.063 |
| REACTIVITY TIME | | | | | | | |
| cream, sec. | 15 | 25 | 27 | 13 | 19 | 12 | 11 |
| cure, sec. | 20 | 35 | 40 | 21 | 24 | 22 | 15 |
| RELEASE VALUE | 7 | 6 | 6 | 8 | 6 | 6 | 6 |

TABLE II (cont.)
Examples and Comparative Runs

| COMPONENT AND RESULTS | N | 23 | 24 | 25 |
|---|---|---|---|---|
| POLYOL B, pbw[1] | 100 | 92.5 | 92.5 | 92.5 |
| ahe[2] | 0.061 | 0.057 | 0.057 | 0.057 |
| POLYETHERAMINE A, pbw[1] | --- | 7.5 | 7.5 | 7.5 |
| ahe[2] | --- | 0.075 | 0.075 | 0.075 |
| POLYOL C, pbw[1] | 30 | 30 | 30 | 30 |
| ahe[2] | 0.967 | 0.967 | 0.967 | 0.967 |
| ZINC STEARATE, pbw[1] | 2 | 2 | 2 | 2 |
| OLEOYL SARCOSINE, pbw[1] | 2 | --- | --- | --- |
| equiv.[3] | 0.0057 | --- | --- | --- |

**TABLE II (cont.)**
Examples and Comparative Runs

| COMPONENT AND RESULTS | N | 23 | 24 | 25 |
|---|---|---|---|---|
| TALLOIL SARCOSINE, pbw[1] | --- | 2 | --- | --- |
| equiv.[3] | --- | unknown | --- | --- |
| ISOOLEOYL SARCOSINE, pbw[1] | --- | --- | 2 | --- |
| | --- | --- | 0.0057 | --- |
| COCOYL GLYCINE, pbw[1] | --- | --- | --- | 2 |
| equiv.[3] | --- | --- | --- | unknown |
| POLYISOCYANATE A, pbw[1] | 147 | 152 | 152 | 152 |
| equiv.[3] | 1.028 | 1.063 | 1.063 | 1.063 |
| REACTIVITY TIME | | | | |
| cream, sec. | 20 | 9 | 7 | 16 |
| cure, sec. | 25 | 15 | 14 | 22 |
| RELEASE VALUE | 4 | 9 | 9 | 8 |

**TABLE III**

| COMPONENT AND RESULTS | | Examples 26 | 27 | 28* | 29* |
|---|---|---|---|---|---|
| POLYOL B, | pbw[1] | 92.5 | 92.5 | 92.5 | 92.5 |
| | ahe[2] | 0.057 | 0.057 | 0.057 | 0.057 |
| POLYETHERAMINE A, | pbw[1] | 7.5 | 7.5 | 7.5 | 7.5 |
| | ahe[2] | 0.075 | 0.075 | 0.075 | 0.075 |
| POLYOL C, | pbw[1] | 30 | 30 | 30 | 30 |
| | ahe[2] | 0.967 | 0.967 | 0.967 | 0.967 |
| OLEOYL SARCOSINE, | pbw[1] | 2 | 2 | 2 | 2 |
| | equiv.[3] | 0.0057 | 0.0057 | 0.0057 | 0.0057 |
| METAL CARBOXYLATE, | TYPE | MgSt[5] | CaSt[6] | AlMSt[7] | AlDSt[8] |
| | pbw[1] | 2 | 2 | 2 | 2 |
| POLYISOCYANATE A, | pbw[1] | 152 | 152 | 152 | 152 |
| | equiv.[3] | 1.063 | 1.063 | 1.063 | 1.063 |
| REACTIVITY TIME | | | | | |
| cream, sec. | | 19 | 20 | 30 | 30 |
| cure, sec. | | 24 | 24 | 36 | 34 |
| RELEASE VALUE | | 9 | 8 | 5 | 3 |

* Comparative Example

TABLE III (cont.)

| COMPONENT AND RESULTS | Examples 30* | 31 | 32* | 33* | 34* |
|---|---|---|---|---|---|
| POLYOL B, pbw[1] | 92.5 | 92.5 | 92.5 | 92.5 | 92.5 |
| ahe[2] | 0.057 | 0.057 | 0.057 | 0.057 | 0.057 |
| POLYETHERAMINE A, pbw[1] | 7.5 | 7.5 | 7.5 | 7.5 | 7.5 |
| ahe[2] | 0.075 | 0.075 | 0.075 | 0.075 | 0.075 |
| POLYOL C, pbw[1] | 30 | 30 | 30 | 30 | 30 |
| ahe[2] | 0.967 | 0.967 | 0.967 | 0.967 | 0.967 |
| OLEOYL SARCOSINE, pbw[1] | 2 | 2 | 2 | 2 | 2 |
| equiv.[3] | 0.0057 | 0.0057 | 0.0057 | 0.0057 | 0.0057 |
| METAL CARBOXYLATE, TYPE | AlTSt[9] | LiSt[10] | NaSt[11] | KSt[12] | CdSt[13] |
| pbw[1] | 2 | 2 | 2 | 2 | 2 |
| POLYISOCYANATE A, pbw[1] | 152 | 152 | 152 | 152 | 152 |
| equiv.[3] | 1.063 | 1.063 | 1.063 | 1.063 | 1.063 |
| REACTIVITY TIME | | | | | |
| cream, sec. | 35 | 29 | 15 | 16 | 15 |
| cure, sec. | 45 | 34 | 18 | 20 | 18 |
| RELEASE VALUE | 9 | 9 | 9 | 7 | 5 |

* Comparative Example

TABLE III (cont.)

| COMPONENT AND RESULTS | Examples 35 | 36 | 37 | 38 |
|---|---|---|---|---|
| POLYOL B, pbw[1] | 92.5 | 92.5 | 92.5 | 92.5 |
| ahe[2] | 0.057 | 0.057 | 0.057 | 0.057 |
| POLYETHERAMINE A, pbw[1] | 7.5 | 7.5 | 7.5 | 7.5 |
| ahe[2] | 0.075 | 0.075 | 0.075 | 0.075 |
| POLYOL C, pbw[1] | 30 | 30 | 30 | 30 |
| ahe[2] | 0.967 | 0.967 | 0.967 | 0.967 |
| OLEOYL SARCOSINE, pbw[1] | 2 | 2 | 2 | 2 |
| equiv.[3] | 0.0057 | 0.0057 | 0.0057 | 0.0057 |
| METAL CARBOXYLATE, TYPE | NiSt[20] | FeSt[21] | BaSt[22] | CuSt[23] |
| pbw[1] | 2 | 2 | 2 | 2 |
| POLYISOCYANATE A, pbw[1] | 152 | 152 | 152 | 152 |
| equiv.[3] | 1.063 | 1.063 | 1.063 | 1.063 |
| REACTIVITY TIME | | | | |
| cream, sec. | 16 | 30 | 20 | 12 |
| cure, sec. | 25 | 45 | 30 | 18 |
| RELEASE VALUE | 9 | 9 | 9 | 9 |

Examples 39 and 40 and Comparative Runs 0 Through T

The general procedure was employed using various components. The components except the isocyanate were blended together and stored for various periods of time at 23 °C prior to mixing with the polyisocyanate and molding. The compositions and results are provided in the following Table IV.

TABLE IV
Examples and Comparative Runs

| COMPONENT AND RESULTS | | O | P | Q | 39 | 40 | R | S | T |
|---|---|---|---|---|---|---|---|---|---|
| POLYOL B, | pbw[1] | 92.5 | 92.5 | 92.5 | 92.5 | 92.5 | 92.5 | 92.5 | 92.5 |
| | ahe[2] | 0.057 | 0.057 | 0.057 | 0.057 | 0.057 | 0.057 | 0.057 | 0.057 |
| POLYETHERAMINE A, | pbw[1] | 7.5 | 7.5 | 7.5 | 7.5 | 7.5 | 7.5 | 7.5 | 7.5 |
| | ahe[2] | 0.075 | 0.075 | 0.075 | 0.075 | 0.075 | 0.075 | 0.075 | 0.075 |
| POLYOL C, | pbw[1] | 18 | 18 | 18 | 18 | 18 | 18 | 18 | 18 |
| | ahe[2] | 0.58 | 0.58 | 0.58 | 0.58 | 0.58 | 0.58 | 0.58 | 0.58 |
| OLEOYL SARCOSINE, | pbw[1] | --- | 2 | --- | 2 | --- | 4 | --- | --- |
| | equiv.[3] | --- | 0.0057 | --- | 0.0057 | --- | 0.011 | --- | --- |
| OLEIC ACID, | pbw[1] | --- | --- | 2 | --- | 2 | --- | 4 | --- |
| | equiv.[3] | --- | --- | 0.008 | --- | 0.008 | --- | 0.014 | --- |
| ZINC STEARATE, | pbw[1] | --- | --- | --- | 2 | 2 | --- | --- | 4 |
| POLYISOCYANATE A, | pbw[1] | 96.4 | 96.4 | 96.4 | 96.4 | 96.4 | 96.4 | 96.4 | 96.4 |
| | equiv.[3] | 0.674 | 0.674 | 0.674 | 0.674 | 0.674 | 0.674 | 0.674 | 0.674 |

TABLE IV (cont.)
Examples and Comparative Runs

| COMPONENT AND RESULTS | O | P | Q | 39 | 40 | R | S | T |
|---|---|---|---|---|---|---|---|---|
| 0 Hours Storage | | | | | | | | |
| REACTIVITY TIME, cream, sec. | 10 | 22 | 25 | 10 | 15 | 33 | 37 | 15 |
| cure, sec. | 15 | 30 | 35 | 15 | 25 | 47 | 49 | 17 |
| RELEASE VALUE | 0 | 2 | 4 | 9 | 9 | 5 | 7 | 0 |
| 24 Hours Storage | | | | | | | | |
| REACTIVITY TIME, cream, sec. | 22 | 65 | 55 | 10 | 25 | 90 | 90 | 15 |
| cure, sec. | 30 | 90 | 90 | 15 | 45 | 120 | 120 | 20 |
| RELEASE VALUE | 0 | 0 | 2 | 9 | 9 | 0 | 5 | 0 |
| 72 Hours Storage | | | | | | | | |
| REACTIVITY TIME, cream, sec. | 20 | 55 | 45 | 10 | 18 | 90 | 90 | 13 |
| cure, sec. | 30 | 90 | 90 | 15 | 45 | ∞ | 120 | 20 |
| RELEASE VALUE | 0 | 2 | 2 | 9 | 9 | 0 | 0 | 0 |
| 312 Hours Storage | | | | | | | | |
| REACTIVITY TIME, cream, sec. | 25 | 60 | 50 | 17 | 18 | 90 | 90 | 17 |
| cure, sec. | 30 | 90 | 90 | 25 | 45 | ∞ | ∞ | 25 |
| RELEASE VALUE | 0 | 0 | 2 | 9 | 9 | 0 | 0 | 0 |

The general procedure followed in Examples 1 through 40 and Comparative Runs A through T is only a rough screening test. The results observed from hand mixed formulations are not always duplicated by machine mixed formulations. Formulations prepared by machine mixing typically employ either low pressure mechanical mixing or high pressure impingement mixing.

Examples 41 Through 43 and Comparative Runs U Through Z

These examples and comparative runs employed a production model (Krauss Maffei PU 40) reaction injection molding machine. The mold was a Steel Plaque Tool, 22" x 26" x 1/8" (558.8 mm x 660.4 mm x 3.175 mm). The mold surface was cleaned and then waxed and buffed 3 times. The conditions employed were as follows:

| | |
|---|---|
| B-side | |
| Temperature | 115°-120°F (46.1°-48.8°C) |
| Injection Pressure | 150 bars (150 kPa) |
| A-side | |
| Temperature | 120°F (48.8°C) |
| Injection Pressure | 150 bars (150 kPa) |
| Injection Rate | ~150 lbs/min (1134 g/s) |
| Shot Time | 1.5-2 sec. |
| Mold Temperature | 150°-170°F (65.5°-76.6°C) |
| Demold Time | 60 sec. |
| Post Cure, Time/Temp. | 30 minutes/250°F (1800 s/121.1°C) |

The components and results are provided in the following Table V.

TABLE V
Examples and Comparative Runs

| COMPONENT AND RESULTS | U | V | W | X | Y | Z | 41 | 42 | 43 |
|---|---|---|---|---|---|---|---|---|---|
| POLYOL B, pbw1 | 92.5 | 92.5 | 92.5 | 92.5 | 92.5 | 92.5 | 92.5 | 92.5 | 92.5 |
| ahe2 | 0.057 | 0.057 | 0.057 | 0.057 | 0.057 | 0.057 | 0.057 | 0.057 | 0.057 |
| POLYETHERAMINE A, pbw1 | 7.5 | 7.5 | 0 | 7.5 | 7.5 | 7.5 | 7.5 | 7.5 | 7.5 |
| ahe2 | 0.075 | 0.075 | 0 | 0.075 | 0.075 | 0.075 | 0.075 | 0.075 | 0.075 |
| POLYOL C, pbw1 | 18 | 18 | 18 | 18 | 18 | 18 | 18 | 18 | 18 |
| ahe2 | 0.58 | 0.58 | 0.58 | 0.58 | 0.58 | 0.58 | 0.58 | 0.58 | 0.58 |
| OLEIC ACID, pbw1 | --- | 4 | 3 | --- | 3 | 3.3 | --- | 3 | --- |
| equiv.3 | --- | 0.014 | 0.011 | --- | 0.011 | 0.012 | --- | 0.011 | --- |
| OLEOYL SARCOSINE, pbw1 | --- | --- | --- | --- | --- | --- | 3 | --- | 2 |
| equiv.3 | --- | --- | --- | --- | --- | --- | 0.008 | --- | 0.057 |
| DETA14, pbw1 | --- | --- | 2 | --- | --- | --- | --- | --- | --- |
| ahe2 | --- | --- | 0.097 | --- | --- | --- | --- | --- | --- |
| EDA15, pbw1 | --- | --- | --- | --- | --- | 0.7 | --- | --- | --- |
| ahe2 | --- | --- | --- | --- | --- | 0.047 | --- | --- | --- |
| DEA16, pbw1 | --- | --- | --- | --- | 1.8 | --- | --- | --- | --- |
| ahe2 | --- | --- | --- | --- | 0.051 | --- | --- | --- | --- |
| SODIUM OLEATE, pbw1 | --- | --- | --- | 1 | --- | --- | --- | --- | --- |

TABLE V (cont.)
Examples and Comparative Runs

| COMPONENT AND RESULTS | U | V | W | X | Y | Z | 41 | 42 | 43 |
|---|---|---|---|---|---|---|---|---|---|
| ZINC STEARATE, pbw[1] | --- | --- | --- | --- | --- | --- | 1 | 1 | 2 |
| CATALYST A, pbw[1] | 0.2 | 0.7 | 0.8 | 0.2 | 0.4 | 0.4 | 0.2 | 0.2 | 0.2 |
| POLYISOCYANATE A, pbw[1] | 99.3 | 99.3 | 99.3 | 99.3 | 99.3 | 99.3 | 99.3 | 99.3 | 99.3 |
| equiv.[3] | 0.694 | 0.694 | 0.694 | 0.694 | 0.694 | 0.694 | 0.694 | 0.694 | 0.694 |
| TENSILE STRENGTH, psi | 3700 | 3800 | 3300 | 2600 | 3300 | 3900 | 3300 | 3200 | 3400 |
| MPa | 25.5 | 26.2 | 22.7 | 17.9 | 22.7 | 26.9 | 22.7 | 22.1 | 23.4 |
| ELONGATION, % | 240 | 155 | 165 | 105 | 180 | 195 | 220 | 260 | 240 |
| NO. OF RELEASES[18] | 2 | 18 | 22 | 22 | 18 | 2 | 23 | 23 | 30+ |

Examples 44 Through 46 and Comparative Run AA

These examples and comparative run employed a different RIM production machine (Cincinnati Milicron RIM-90) and an actual prototype part. The conditions employed were as follows:

| | |
|---|---|
| B-side | |
| Temperature | 95°F (35°C) |
| Injection Pressure | 1800-2100 psi (12.4-14.5 MPa) |
| A-side | |
| Temperature | 80°F (26.7°C) |
| Injection Pressure | 1600-1900 psi (11-13.1 MPa) |
| Injection Rate | 6.0-3.5 lbs./sec. (2.7-1.6 kg/s) |
| Shot Time | 1.8-3.1 sec. |
| Mold Temperature | 130°-155°F (54.4°-68.3°C) |
| Demold Time | 30-60 sec. |
| Post Cure, Time/Temp. | 60 minutes/250°F (3600 s/121.1°C) |

The plaque mold was constructed of P-20 tool steel. The mold surface was cleaned using "Slide Mold Cleaner" (commercially available from Percy Harms Corp.). No subsequent treatment was made prior to molding.

The components and results are provided in the following Table VI. For these examples and the comparative runs, each system was catalyzed by the addition of 0.15 percent by weight of the B side of Catalyst A and 0.1 percent by weight of Catalyst B.

TABLE VI
Examples and Comparative Runs

| COMPONENT AND RESULTS | 44 | 45 | 46 | AA |
|---|---|---|---|---|
| POLYOL B, pbw1 | 92.5 | 92.5 | 92.5 | 92.5 |
| ahe2 | 0.057 | 0.057 | 0.057 | 0.057 |
| POLYETHERAMINE A, pbw1 | 7.5 | 7.5 | 7.5 | 7.5 |
| ahe2 | 0.075 | 0.075 | 0.075 | 0.075 |
| DETDA17, pbw1 | 18 | 20 | 22 | 22 |
| ahe2 | 0.404 | 0.449 | 0.494 | 0.494 |
| OLEOYL SARCOSINE, pbw1 | 2 | 2 | 2 | --- |
| equiv.3 | 0.0057 | 0.0057 | 0.0057 | --- |
| ZINC STEARATE, pbw1 | 2 | 2 | 2 | --- |
| POLYISOCYANATE B, pbw1 | 54.7 | 58.9 | 63.1 | 63.1 |
| equiv.3 | 0.303 | 0.326 | 0.350 | 0.350 |
| NO. OF RELEASES (BARE METAL)18 | 35+ | 35+ | 35+ | 0 |
| CONSECUTIVE19 (BARE METAL) | 35+ | 70+ | 105+ | --- |
| TENSILE STRENGTH, psi | 2800 | 2800 | 3100 | --- |
| MPa | 19.3 | 19.3 | 21.4 | --- |
| ELONGATION, % | 230 | 240 | 240 | --- |
| DIE C TEAR STRENGTH, pli | 500 | 500 | 500 | --- |
| k(large n)/m | 87.6 | 87.6 | 87.6 | --- |
| FLEXURAL MODULUS, psi | 26000 | 30000 | 38000 | --- |
| MPa | 179.1 | 206.7 | 261.8 | --- |

FOOTNOTES TO TABLES I-VI

[1]pbw = parts by weight

[2]ahe = active hydrogen equivalents (pbw ÷ (molecular weight ÷ number of hydrogen atoms attached to either an oxygen atom or a nitrogen atom))

[3]equiv. = equivalents

[4]ZnSt = zinc stearate

[5]MgSt = magnesium stearate

[6]CaSt = calcium stearate

[7]AlMSt = aluminum monostearate

[8]AlDSt = aluminum distearate

[9]AlTSt = aluminum tristearate

[10]LiSt = lithium stearate

[11]NaSt = sodium stearate

[12]KSt = potassium stearate

[13]CdSt = cadmium stearate

[14]DETA = diethylenetriamine

[15]EDA = ethylenediamine

[16]DEA = diethanolamine

[17]DETDA = diethyltoluenediamine

[18]NO. OF RELEASES = number of consecutive releases. The run for the example was stopped after the indicated no. of parts were made with no mold sticking being observed.

[19]CONSECUTIVE = consecutive releases including previous experiments, which were tested. No mold sticking was observed.

[20]NiSt = nickel stearate

[21]FeSt = ferrous stearate

[22]BaSt = barium stearate

[23]CuSt = cupric stearate

Comparative Run AB

B-Side Formulation

93 parts by weight Polyol B
7 parts by weight Polyetheramine A
18 parts by weight Diamine A

Preparation

93 lbs (42.2 kg) of Polyol B was weighed into the polyol tank of an Admiral 400-2HP reaction injection molding (RIM) machine, to it was then added 7 lb (3.2 kg) of Polyetheramine A and 18 lbs (8.2 kg) of Diamine A. The tank was then closed and pressured (9 psi, 62 kPa) with dry nitrogen. The stirrer in the tank was turned on, then the low pressure pump, and then the high pressure pump. The fluid was allowed to circulate till a homogeneous solution was obtained, about 40 minutes (2400 s). The system was catalyzed by the addition of 0.1% by weight of the B side of each of the following catalysts, Catalyst A and Catalyst B.

The machine was calibrated to give an index of 105 with a B-side/A-side weight ratio of 1.87 using polyisocyanate B as the A-side component.

Sample plaques were prepared under the following conditions. The shot time was 2 seconds and the demold time was 60 seconds.

| | | Polyol (B side) | Isocyanate (A side) |
|---|---|---|---|
| Injection pressure, | psi<br>kPa | 2000<br>13790 | 2000<br>13790 |
| Component Temp. °F/°C | | 100/37.8 | 100/37.8 |
| Mold Temp. °F/°C | | 150/65.6 | 150/65.6 |

The parts were shot into a chrome steel plaque mold which made a plaque 14" x 12" x 1/8" (356 mm x 305 mm x 3.18 mm) and weighed approximately 470 gms.

Mold Preparation

Before any parts were shot the mold was meticulously cleaned with a propriatory mold cleaner and all traces of previous polymer removed. The mold was then dried and polished. There was no further preparation of the mold.

Results

Part 1. The plaque released from the mold with a slight pull.
Part 2. A strong pull was required to pull the plaque from the mold.
Part 3. The plaque stuck to the mold, and was removed with great difficulty. The plaque tore and parts were left adhering to the mold. This was quite unsatisfactory.

Example 47

"B-side" Formulation

93 parts by weight Polyol B
7 parts by weight Polyetheramine A
18 parts by weight Diamine A
2.5 parts by weight zinc stearate

Preparation

63 lbs (28.6 kg) of Polyol B were weighed into a stainless steel, twenty five gallon (0.095 $m^3$) vessel equipped with heating and stirring. To it was added 7 lbs (3.2 kg) Polyetheramine A and 2.5 lbs (1.13 kg) of zinc stearate. The mixture was heated to about 85°C with stirring for about 45 minutes (2700 s), after which time a slightly cloudy solution was obtained. The fluid was transferred to the polyol tank of an Admiral 400-2HP (RIM) machine, and the remainder of Polyol B, 30 lbs (13.6 kg) was added along with 18 lbs (8.2 kg) of Diamine A. The tank closed pressurized and recirculated as described in Comparative Experiment AB. The system was then catalyzed as in Comparative Experiment AB. The machine conditions and B-side/A-side ratio, index, and isocyanate were the same as in Comparative Experiment AB as was the preparation of the mold.

Results

Parts 1 through 16 were prepared and removed from the mold with no evidence of sticking or adhesion to the mold. The surface of the finished plaques was excellent. The trial was arbitrarily concluded at Part 16.

Eample 48

The formulation of Example 47 was changed by substituting 2.5 lbs (1.13 kg) of zinc laurate for the 2.5 lbs (1.13 kg) of zinc stearate. Method of preparation and all other conditions as in Example 47.

Results

Parts 1 through 19 were prepared and removed from the mold with no evidence of sticking or adhesion. The trial was arbitrarily concluded at Part 19.

Example 49

Using the method of preparation and machine condition as in Example 47, but using 0.5 lbs (0.23 kg) of zinc stearate.

Results

Parts 1 through 15 were obtained without sticking or adhesion. The trial was arbitrarily concluded at Part 15.

Example 50

Method of preparation and all other conditions as in Example 47 except that 6 lbs (2.7 kg) zinc stearate were added rather than 2.5 lbs (1.13 kg) zinc stearate.

Results

Parts 1 through 16 were produced without sticking or adhesion to the mold, arbitrarily concluded at Part 16.

Comparative Experiment AC

B-side Formulation

93 parts by weight Polyol B
7 parts by weight Polyetheramine A
18 parts by weight Polyol C

Preparation

The system was prepared as in Comparative Experiment AB, except that Polyol C was used in place of Diamine A.
Polyisocyanate A was employed as the A-side component at an index of 103. Catalysts as described in Comparative Experiment AB were employed. Machine conditions as in Comparative Experiment AB were employed. Mold preparation as in Comparative Experiment AB were employed.

Results

Part 1. Part released from mold.
Part 2. Massive adhesion, surface of part was ruined.

EXAMPLE 51

Formulation as in Comparative Experiment AC with the addition of 2.5 lbs (1.13 kg) zinc stearate.

Method of Preparation as in Example 47 except that Polyol C was used instead of Diamine A.

Machine conditions and isocyanate used as in Comparative Experiment AC. Mold preparation was as previously described.

Results

Parts 1-12 were prepared with no sticking or adhesion to the mold. The testing was arbitrarily concluded after Part 12.

Example 52 and Comparative Run AD

An experiment was conducted employing an Admiral 400-2HP RIM machine and a stainless steel plaque mold measuring 12 in. x 14 in. x 1/8 in. (305 mm x 356 mm x 3.18 mm). The mold was not treated prior to use. The compositions and conditions were as follows:

Polyisocyanate (A-side)

Polyisocyanate B was employed in a quantity which provided an NCO Index of 103.

Polyol (B-side Formulation)

50 pbw Polyetheramine C
50 pbw mixture of 93 wt.% Polyol B and 7 wt.% Polyetheramine A
18 pbw Diamine A
0 or 2 pbw zinc stearate
.05 wt.% Catalyst B
.05 wt.% dibutyl tin dilaurate (T-12 from M&T Chemical)

Conditions

weight ratio of A-side to B-side -- 0.465/1
116 ° F(46.7 ° C) -- temperature of reactants
2400 psig(16548 kPa gage) -- injection pressure
145 ° F(62.8 ° C) -- mold temperature
60 seconds -- demold time

Results

Prior to the addition of the zinc stearate to the polyol (B-side), several plaques were made. These plaques required considerable effort to obtain release of the plaque from the mold. After addition of the zinc stearate to the polyol (B-side) formulation, 17 parts were made with no indication of sticking or polymer buildup before the polyol (B-side) ran low on material causing the experiment to be terminated. Some of these parts literally fell out of the mold upon opening of the mold.

EXAMPLE 53

An experiment was conducted employing an Admiral 400-2HP RIM machine and a stainless steel plaque mold measuring 12 in. x 14 in. x 1/8 in. (305 mm x 356 mm x 3.18 mm). The mold was treated with external mold release on one side of the mold. After the seventh sample, the external mold release was stripped from that side so that the entire mold was bare steel.

The composition and conditions were as follows:

Polyisocyanate (A-side)

Polyisocyanate B was employed in quantity which provided an NCO index of 103.

Polyol (B-side Formulation)

100 pbw Polyol B
25 pbw Diamine A
2 pbw zinc stearate
2 pbw oleoyl sarcosine
0.1 wt.% catalyst A
0.1 wt.% catalyst B

Conditions

weight ratio of A-side to B-side was 0.5/1.
Temperature of the reactants was 100 °F (37.8 °C).
Temperature of the mold was 140 °F (60 °C).
Injection pressure was 2000 psig (13790 kPa gage).
Demold time was 60 seconds.

The formulation provided good release for 17 samples off one bare steel face and 10 releases off both bare steel faces.

## Claims

**1.** An active hydrogen-containing composition, suitable for use in reaction injection molding with a polyisocyanate consisting of

(A) a lithium, copper, magnesium, calcium, barium, zinc, iron, cobalt or nickel salt of a carboxylic acid containing at least one terminal or pendant saturated or unsaturated hydrocarbon group having from 8 to 22 carbon atoms when said material contains an amido group or from 10 to 22 carbon atoms when said material does not contain an amido group, and

(B) an aminated polyether containing primary and/or secondary amine group or a mixture thereof with at least one other active hydrogen-containing material containing either hydroxyl groups, primary amine groups, secondary amine groups or mixtures of such groups wherein all or a portion of the hydroxyl or amine groups may be replaced with -SH groups, and, if desired,

(C) an amido-containing carboxylic acid represented by the formula

R-C(O)-N(R')-R''-C(O)-OH

wherein R is a hydrocarbon or substituted hydrocarbon group having from 1 to 29 carbon atoms, R' is hydrogen or an alkyl group or hydroxyl-substituted alkyl group having from 1 to 3 carbon atoms and R'' is a divalent hydrocarbon group having from 1 to 3 carbon atoms, and, if desired,

(D) further non-active hydrogen-containing components selected from conventional catalysts other than (A), coloring agents, fire retardant agents, fillers, modifiers, cell control agents or/and blowing agents

wherein (i) the weight ratio of component (A) to component (B) is from 0.004:1 to 0.05:1, and (ii) the weight ratio of that portion of component (B) containing primary and/or secondary amine groups to component (A) is at least 2:1 and (iii) the reaction mixture is devoid of a polymer or co-polymer of one or more olefinically unsaturated monomers, having a molecular weight of from 200 to 50,000.

**2.** A composition as claimed in claim 1 wherein component (A) is a zinc, calcium, magnesium, copper or nickel salt of an aliphatic carboxylic acid selected from stearic acid, oleic acid, palmitic acid, lauric acid and sarcosinates of said acids.

**3.** A composition as claimed in claim 2 wherein component (B) comprises a polyether or polyester polyol with an average total hydrogen equivalent weight of between 500 and 5000.

**4.** An active hydrogen-containing composition as claimed in Claim 1 comprising

(A) 93 parts by weight of a polyetherpolyol being the reaction product of glycerine and propylene oxide end-capped with 18% by weight ethylene oxide having a hydroxyl equivalent weight of 1635 wherein about 75% of the hydroxyl groups are primary ones,

(B) 7 parts by weight of an aminated polyoxypropylene glycol represented by the formula

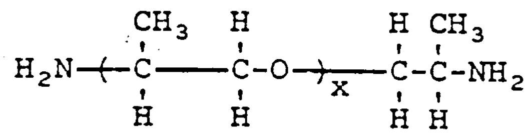

wherein X has a value of 5.6 and having an average amine hydrogen equivalent weight of 100,
(C) 18 parts by weight diethyltoluene diamine,
(D) 0.5 -6 parts of zinc stearate.

**5.** An active hydrogen-containing composition as claimed in Claim 1 comprising
(A) 50 parts by weight of a polyoxypropylene triol of molecular weight 5000 which had been aminated to an extent of about 80%,
(B) 46.5 parts by weight of a polyetherpolyol being the reaction product of glycerine and propylene oxide end-capped with 18% by weight ethylene oxide having a hydroxyl equivalent weight of 1635 wherein about 75% of the hydroxyl groups are primary ones,
(C) 3.5 parts by weight of an aminated polyoxypropylene glycol represented by the formula

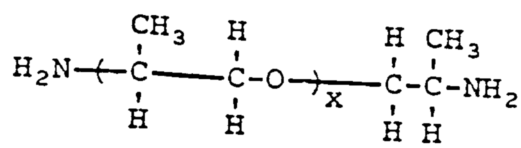

wherein X has a value of 5.6 and having an average amine hydrogen equivalent weight of 100,
(D) 18 parts by weight diethyltoluene diamine,
(E) 2 parts by weight of zinc stearate,
(F) 0.05 weight percent dibutyl tin dilaurate and 0.05 weight percent of a 33% solution of triethylene diamine in dipropylene glycol.

**6.** A process for preparing molded articles in which a polyisocyanate is reacted with an active hydrogen-containing composition by reaction injection molding, characterized in that the active hydrogen-containing composition consists of
(A) a lithium, copper, magnesium, calcium, barium, zinc, iron, cobalt or nickel salt of a carboxylic acid containing at least one terminal or pendant saturated or unsaturated hydrocarbon group having from 8 to 22 carbon atoms when said material contains an amido group or from 10 to 22 carbon atoms when said material does not contain an amido group, and
(B) an aminated polyether containing primary and/or secondary amine groups or a mixture thereof with at least one other active hydrogen-containing material containing either hydroxyl groups, primary amine groups, secondary amine groups or mixtures of such groups wherein all or a portion of the hydroxyl or amine groups may be replaced with -SH groups, and, if desired,
(C) an amido-containing carboxylic acid represented by the formula

R-C(O)-N(R')-R''-C(O)-OH

wherein R is a hydrocarbon or substituted hydrocarbon group having from 1 to 29 carbon atoms, R' is hydrogen or an alkyl group or hydroxyl-substituted alkyl group having from 1 to 3 carbon atoms and R'' is a divalent hydrocarbon group having from 1 to 3 carbon atoms, and, if desired,
(D) further non-active hydrogen-containing components selected from conventional catalysts other than (A), coloring agents, fire retardant agents, fillers, modifiers cell control agents or/and blowing agents
wherein (i) the weight ratio of component (A) to component (B) is from 0.004:1 to 0.05:1, and (ii) the weight ratio of that portion of component (B) containing primary and/or secondary amine groups to component (A) is at least 2:1 and (iii) the reaction mixture is devoid of a polymer or co-polymer of one or more olefinically unsaturated monomers, having a molecular weight of from 200 to 50,000.

7. A process as claimed in claim 6 wherein component (A) is a zinc, calcium, magnesium, copper or nickel salt of an aliphatic carboxylic acid selected from stearic acid, oleic acid, palmitic acid, lauric acid and sarcosinates of said acids.

8. A process as claimed in claim 7 wherein component (B) comprises a polyether or polyester polyol with an average total hydrogen equivalent weight of between 500 and 5000.

9. A process as claimed in Claim 6 wherein the active hydrogen-containing composition comprises
(A) 93 parts by weight of a polyetherpolyol being the reaction product of glycerine and propylene oxide end-capped with 18% by weight ethylene oxide having a hydroxyl equivalent weight of 1635 wherein about 75% of the hydroxyl groups are primary ones,
(B) 7 parts by weight of an aminated polyoxypropylene glycol represented by the formula

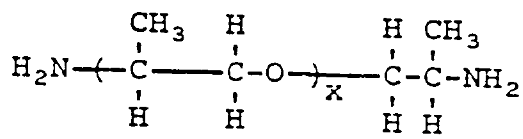

wherein X has a value of 5.6 and having an average amine hydrogen equivalent weight of 100,
(C) 18 parts by weight diethyltoluene diamine,
(D) 0.5 -6 parts of zinc stearate.

10. A process as claimed in Claim 6 wherein the active hydrogen-containing composition comprises
(A) 50 parts by weight of a polyoxypropylene triol of molecular weight 5000 which had been aminated to an extent of about 80%,
(B) 46.5 parts by weight of a polyetherpolyol being the reaction product of glycerine and propylene oxide end-capped with 18% by weight ethylene oxide having a hydroxyl equivalent weight of 1635 wherein about 75% of the hydroxyl groups are primary ones,
(C) 3.5 parts by weight of an aminated polyoxypropylene glycol represented by the formula

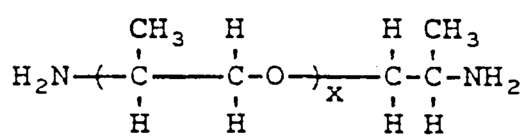

wherein X has a value of 5.6 and having an average amine hydrogen equivalent weight of 100,
(D) 18 parts by weight diethyltoluene diamine,
(E) 2 parts by weight of zinc stearate,
(F) 0.05 weight percent dibutyl tin dilaurate and 0.05 weight percent of a 33% solution of triethylene diamine in dipropylene glycol.

11. Process according to claim 6, wherein (C) is present.

**Patentansprüche**

1. Aktiven Wasserstoff enthaltende Zusammensetzung, die zur Verwendung beim Reaktionsspritzguß mit einem Polyisocyanat geeignet ist, bestehend aus
(A) einem Lithium-, Kupfer-, Magnesium-, Calcium-, Barium- , Zink-, Eisen-, Kobalt- oder Nickelsalz einer Carbonsäure, die mindestens eine gesättigte oder ungesättigte Kohlenwasserstoff-End- oder -Seitengruppe mit 8 bis 22 Kohlenstoffatomen, wenn das Material eine Amidgruppe enthält, oder mit 10 bis 22 Kohlenstoffatomen enthält, wenn das Material keine Amidgruppe enthält, und
(B) einem aminierten Polyether, der primäre und/oder sekundäre Amingruppen oder ein Gemisch davon mit mindestens einem anderen, aktiven Wasserstoff enthaltenden Material enthält, das entweder Hydroxylgruppen, primäre Amingruppen, sekundäre Amingruppen oder Mischungen solcher Gruppen enthält, worin alle oder ein Teil der Hydroxyl- oder Amingruppen durch -SH-Gruppen

ersetzt sein können, und, sofern gewünscht,
(C) einer Amid-enthaltenden Carbonsäure, dargestellt durch die Formel

R-C(O)-N(R')-R''-C(O)-OH

worin R eine Kohlenwasserstoff- oder eine substituierte Kohlenwasserstoffgruppe mit 1 bis 29 Kohlenstoffatomen ist, R' Wasserstoff oder eine Alkylgruppe oder eine Hydroxyl-substituierte Alkylgruppe mit 1 bis 3 Kohlenstoffatomen ist und R'' eine zweiwertige Kohlenwasserstoffgruppe mit 1 bis 3 Kohlenstoffatomen ist, und, sofern gewünscht,
(D) weiteren, inaktiven Wasserstoff enthaltenden Komponenten, ausgewählt aus gebräuchlichen, von (A) verschiedenen Katalysatoren, Farbstoffen, Feuerhemmstoffen, Füllmitteln, Modifizierungsmitteln, Zellkontrollmitteln oder/und Treibmitteln,
worin (i) das Gewichtsverhältnis von Komponente (A) zu Komponente (B) von 0,004 : 1 bis 0,05 : 1 ist und (ii) das Gewichtsverhältnis desjenigen Anteils von Komponente (B), der primäre und/oder sekundäre Amingruppen enthält, zu Komponente (A) mindestens 2 : 1 ist und (iii) das Reaktionsgemisch von einem Polymer oder Copolymer aus einem oder mehreren olefinisch ungesättigten Monomeren mit einem Molekulargewicht von 200 bis 50000 frei ist.

2. Zusammensetzung nach Anspruch 1, worin Komponente (A) ein Zink-, Calcium-, Magnesium-, Kupfer- oder Nickelsalz einer aliphatischen Carbonsäure ist, ausgewählt aus Stearinsäure, Ölsäure, Palmitinsäure, Laurinsäure und Sarcosinaten dieser Säuren.

3. Zusammensetzung nach Anspruch 2, worin Komponente (B) ein Polyether- oder Polyesterpolyol mit einem mittleren Wasserstoff-Gesamtäquivalenzgewicht zwischen 500 und 5000 umfaßt.

4. Aktiven Wasserstoff enthaltende Zusammensetzung nach Anspruch 1, umfassend
(A) 93 Gewichtsteile eines Polyetherpolyols, welches das Reaktionsprodukt von Glycerin und Propylenoxid ist, das an den Enden mit 18 Gewichts-% Ethylenoxid versehen ist, das ein Hydroxyl-Äquivalenzgewicht von 1635 aufweist, worin etwa 75 % der Hydroxylgruppen primär sind,
(B) 7 Gewichtsteile eines aminierten Polyoxypropylenglycols, dargestellt durch die Formel

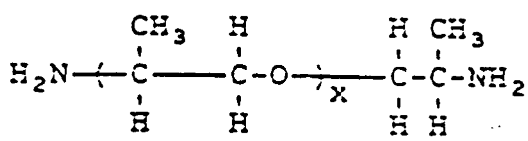

worin X einen Wert von 5,6 hat und das ein mittleres Aminwasserstoff-Äquivalenzgewicht von 100 aufweist,
(C) 18 Gewichtsteile Diethyltoluoldiamin,
(D) 0,5 bis 6 Teile Zinkstearat.

5. Aktiven Wasserstoff enthaltende Zusammensetzung nach Anspruch 1, umfassend
(A) 50 Gewichtsteile eines Polyoxypropylentriols mit einem Molekulargewicht von 5000, das bis zu einem Grad von etwa 80 % aminiert worden ist,
(B) 46,5 Gewichtsteile eines Polyetherpolyols, welches das Reaktionsprodukt von Glycerin und Propylenoxid ist, das an den Enden mit 18 Gew.-% Ethylenoxid versehen ist, das ein Hydroxyl-Äquivalenzgewicht von 1635 aufweist, worin etwa 75 % der Hydroxylgruppen primär sind,
(C) 3,5 Gewichtsteile eines aminierten Polyoxypropylenglycols, dargestellt durch die Formel

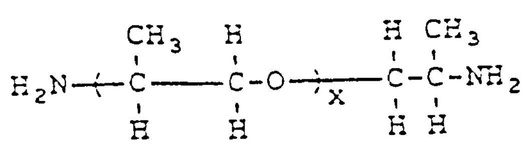

worin X einen Wert von 5,6 aufweist und das ein mittleres Aminwasserstoff-Äquivalenzgewicht von 100 besitzt,

(D) 18 Gewichtsteile Diethyltoluoldiamin,
(E) 2 Gewichtsteile Zinkstearat,
(F) 0,05 Gewichtsteile Dibutylzinndilaurat und 0,05 Gewichtsprozent einer 33 %igen Lösung von Triethylendiamin in Dipropylenglycol.

6. Verfahren zur Herstellung von Formteilen durch Reaktionsspritzguß, worin ein Polyisocyanat mit einer aktiven Wasserstoff enthaltenden Zusammensetzung umgesetzt wird,
**dadurch gekennzeichnet**,
daß die aktiven Wasserstoff enthaltende Zusammensetzung besteht aus
(A) einem Lithium-, Kupfer-, Magnesium-, Calcium-, Barium- , Zink-, Eisen-, Kobalt- oder Nickelsalz einer Carbonsäure, die mindestens eine gesättigte oder ungesättigte Kohlenwasserstoff-End- oder -Seitengruppe mit 8 bis 22 Kohlenstoffatomen enthält, wenn das Material eine Amidgruppe, oder mit 10 bis 22 Kohlenstoffatomen enthält, wenn das Material keine Amidgruppe enthält, und
(B) einem aminierten Polyether, der primäre und/oder sekundäre Amingruppen oder ein Gemisch davon mit mindestens einem anderen, aktiven Wasserstoff enthaltenden Material enthält, das entweder Hydroxylgruppen, primäre Amingruppen, sekundäre Amingruppen oder Mischungen solcher Gruppen enthält, worin alle oder ein Teil der Hydroxyl- oder Amingruppen durch -SH-Gruppen ersetzt sein können, und, sofern gewünscht,
(C) einer Amid-enthaltenden Carbonsäure, dargestellt durch die Formel

R-C(O)-N(R')-R''-C(O)-OH

worin R eine Kohlenwasserstoff- oder eine substituierte Kohlenwasserstoffgruppe mit 1 bis 29 Kohlenstoffatomen ist, R' Wasserstoff oder eine Alkylgruppe oder eine Hydroxyl-substituierte Alkylgruppe mit 1 bis 3 Kohlenstoffatomen ist und R'' eine zweiwertige Kohlenwasserstoffgruppe mit 1 bis 3 Kohlenstoffatomen ist, und, sofern gewünscht,
(D) weiteren, inaktiven Wasserstoff enthaltenden Komponenten, ausgewählt aus gebräuchlichen, von (A) verschiedenen Katalysatoren, Farbstoffen, Feuerhemmstoffen, Füllmitteln, Modifizierungsmitteln, Zellkontrollmitteln oder/und Treibmitteln,
worin (i) das Gewichtsverhältnis von Komponente (A) Zu Komponente (B) von 0,004 : 1 bis 0,05 : 1 ist und (ii) das Gewichtsverhältnis desjenigen Anteils von Komponente (B), der primäre und/oder sekundäre Amingruppen enthält, zu Komponente (A) mindestens 2 : 1 ist und (iii) das Reaktionsgemisch von einem Polymer oder Copolymer aus einem oder mehreren olefinisch ungesättigten Monomeren mit einem Molekulargewicht von 200 bis 50000 frei ist.

7. Verfahren nach Anspruch 6, worin Komponente (A) ein Zink-, Calcium-, Magnesium-, Kupfer- oder Nickelsalz einer aliphatischen Carbonsäure ist, ausgewählt aus Stearinsäure, Ölsäure, Palmitinsäure, Laurinsäure und Sarcosinaten dieser Säuren.

8. Verfahren nach Anspruch 7, worin Komponente (B) ein Polyether- oder Polyesterpolyol mit einem mittleren Wasserstoff-Gesamtäquivalenzgewicht zwischen 500 und 5000 umfaßt.

9. Verfahren nach Anspruch 6, worin die aktiven Wasserstoff enthaltende Zusammensetzung umfaßt:
(A) 93 Gewichtsteile eines Polyetherpolyols, welches das Reaktionsprodukt von Glycerin und Propylenoxid ist, das an den Enden mit 18 Gewichts-% Ethylenoxid versehen ist, das ein Hydroxyl-Äquivalenzgewicht von 1635 aufweist, worin etwa 75 % der Hydroxylgruppen primär sind,
(B) 7 Gewichtsteile eines aminierten Polyoxypropylenglycols, dargestellt durch die Formel

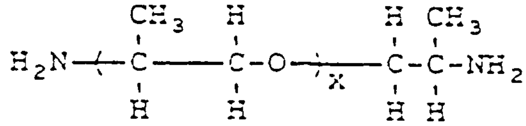

worin X einen Wert von 5,6 hat und das ein mittleres Aminwasserstoff-Äquivalenzgewicht von 100 aufweist,
(C) 18 Gewichtsteile Diethyltoluoldiamin,
(D) 0,5 bis 6 Teile Zinkstearat.

**10.** Verfahren nach Anspruch 6, worin die aktiven Wasserstoff enthaltende Zusammensetzung umfaßt:
(A) 50 Gewichtsteile eines Polyoxypropylentriols mit einem Molekulargewicht von 5000, das bis zu einem Grad von etwa 80 % aminiert worden ist,
(B) 46,5 Gewichtsteile eines Polyetherpolyols, welches das Reaktionsprodukt von Glycerin und Propylenoxid ist, das an den Enden mit 18 Gew.-% Ethylenoxid versehen ist, das ein Hydroxyl-Äquivalenzgewicht von 1635 aufweist, worin etwa 75 % der Hydroxylgruppen primär sind,
(C) 3,5 Gewichtsteile eines aminierten Polyoxypropylenglycols, dargestellt durch die Formel

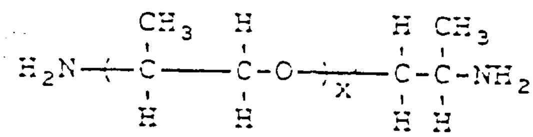

worin X einen Wert von 5,6 aufweist und das ein mittleres Aminwasserstoff-Äquivalenzgewicht von 100 besitzt,
(D) 18 Gewichtsteile Diethyltoluoldiamin,
(E) 2 Gewichtsteile Zinkstearat,
(F) 0,05 Gewichtsteile Dibutylzinndilaurat und 0,05 Gewichtsprozent einer 33 %igen Lösung von Triethylendiamin in Dipropylenglycol.

**11.** Verfahren nach Anspruch 6, worin (C) vorhanden ist.

**Revendications**

**1.** Composition contenant de l'hydrogène actif, appropriée pour être utilisée dans un moulage par injection-réaction avec un polyisocyanate, et constituée de
(A) un sel de lithium, cuivre, magnésium, calcium, baryum, zinc, fer, cobalt ou nickel d'un acide carboxylique comportant au moins un groupe hydrocarboné, terminal ou latéral, saturé ou insaturé, comportant de 8 à 22 atomes de carbone si ledit matériau contient un groupe amido ou de 10 à 22 atomes de carbone si ledit matériau ne contient pas de groupe amido, et
(B) un polyéther aminé contenant des groupes amino primaires et/ou secondaires, ou un mélange de celui-ci avec au moins un autre matériau contenant de l'hydrogène actif, comportant des groupes hydroxyle, des groupes amino primaires, des groupes amino secondaires ou des combinaisons de tels groupes, tout ou partie des groupes hydroxyle ou amino pouvant être remplacés par des groupes -SH, et, si on le souhaite,
(C) un acide carboxylique contenant un groupe amido, représenté par la formule

R-C(O)-N(R')-R''-C(O)-OH

dans laquelle R représente un groupe hydrocarboné, substitué ou non, comportant de 1 à 29 atomes de carbone, R' représente un atome d'hydrogène ou un groupe alkyle ou un groupe alkyle hydroxy-substitué, comportant de 1 à 3 atomes de carbone, et R'' représente un groupe hydrocarboné divalent comportant de 1 à 3 atomes de carbone, et, si on le souhaite,
(D) d'autres composants contenant de l'hydrogène non-actif, choisis parmi les catalyseurs classiques autres que (A), les agents colorants, les agents ignifugeants, les charges, les modificateurs, les agents d'ajustement d'alvéoles et/ou les agents d'expansion,
étant entendu que (i) le rapport pondéral du composant (A) au composant (B) vaut de 0,004:1 à 0,05:1, (ii) le rapport pondéral de la fraction de composant (B) contenant des groupes amino primaires et/ou secondaires au composant (A) vaut au moins 2:1, et (iii) le mélange réactionnel ne contient pas de polymère ou de copolymère d'un ou plusieurs monomères à insaturation oléfinique, présentant une masse moléculaire valant de 200 à 50.000.

**2.** Composition conforme à la revendication 1, dans laquelle le composant (A) est un sel de zinc, calcium, magnésium, cuivre ou nickel d'un acide carboxylique aliphatique choisi parmi l'acide stéarique, l'acide oléique, l'acide palmitique, l'acide laurique et les sarcosinates de ces acides.

3. Composition conforme à la revendication 2, dans laquelle le composant (B) comprend un polyéther-polyol ou un polyester-polyol présentant un poids moyen d'équivalent hydrogène total compris entre 500 et 5000.

4. Composition contenant de l'hydrogène actif, conforme à la revendication 1, comprenant
(A) 93 parties en poids d'un polyéther-polyol qui est le produit de réaction du glycérol et de l'oxyde de propylène, coiffé avec 18 % en poids d'oxyde d'éthylène, qui présente un poids d'équivalent hydroxyle de 1635 et dans lequel environ 75 % des groupes hydroxyle sont des groupes hydroxyle de fonction alcool primaire,
(B) 7 parties en poids d'un polyoxypropylène-glycol aminé représenté par la formule

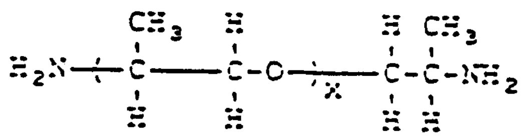

dans laquelle x vaut 5,6, ce corps présentant un poids moyen d'équivalent hydrogène de fonction amine de 100,
(C) 18 parties en poids de diéthyltoluènediamine, et
(D) 0,5 à 6 parties de stéarate de zinc.

5. Composition contenant de l'hydrogène actif, conforme à la revendication 1, comprenant
(A) 50 parties en poids d'un polyoxypropylènetriol dont la masse moléculaire vaut 5000 et qui a subi une amination jusqu'à un degré d'environ 80 %,
(B) 46,5 parties en poids d'un polyéther-polyol qui est le produit de réaction du glycérol et de l'oxyde de propylène, coiffé avec 18 % en poids d'oxyde d'éthylène, qui présente un poids d'équivalent hydroxyle de 1635 et dans lequel environ 75 % des groupes hydroxyle sont des groupes hydroxyle de fonction alcool primaire,
(C) 3,5 parties en poids d'un polyoxypropylèneglycol aminé représenté par la formule

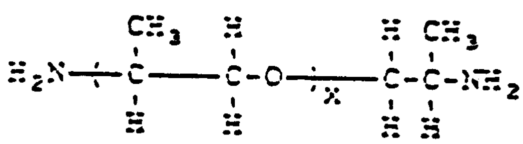

dans laquelle x vaut 5,6, ce corps présentant un poids moyen d'équivalent hydrogène de fonction amine de 100,
(D) 18 parties en poids de diéthyltoluènediamine,
(E) 2 parties de stéarate de zinc,
(F) 0,05 % en poids de dilaurate de dibutyl-étain et 0,05 % en poids d'une solution à 33 % de triéthylènediamine dans du dipropylèneglycol.

6. Procédé de préparation d'articles moulés, dans lequel on fait réagir un polyisocyanate avec une composition contenant de l'hydrogène actif, selon la technique de moulage par injection-réaction, **caractérisé** en ce que la composition contenant de l'hydrogène actif est constituée de
(A) un sel de lithium, cuivre, magnésium, calcium, baryum, zinc, fer, cobalt ou nickel d'un acide carboxylique comportant au moins un groupe hydrocarboné, terminal ou latéral, saturé ou insaturé, comportant de 8 à 22 atomes de carbone si ledit matériau contient un groupe amido ou de 10 à 22 atomes de carbone si ledit matériau ne contient pas de groupe amido, et
(B) un polyéther aminé contenant des groupes amino primaires et/ou secondaires, ou un mélange de celui-ci avec au moins un autre matériau contenant de l'hydrogène actif, comportant des groupes hydroxyle, des groupes amino primaires, des groupes amino secondaires ou des combinaisons de tels groupes, tout ou partie des groupes hydroxyle ou amino pouvant être remplacés par des groupes -SH, et, si on le souhaite,
(C) un acide carboxylique contenant un groupe amido, représenté par la formule

R-C(O)-N(R')-R''-C(O)-OH

dans laquelle R représente un groupe hydrocarboné, substitué ou non, comportant de 1 à 29 atomes de carbone, R' représente un atome d'hydrogène ou un groupe alkyle ou un groupe alkyle hydroxy-substitué, comportant de 1 à 3 atomes de carbone, et R'' représente un groupe hydrocarboné divalent comportant de 1 à 3 atomes de carbone, et, si on le souhaite,

(D) d'autres composants contenant de l'hydrogène non-actif, choisis parmi les catalyseurs classiques autres que (A), les agents colorants, les agents ignifugaents, les charges, les modificateurs, les agents d'ajustement d'alvéoles et/ou les agents d'expansion,

étant entendu que (i) le rapport pondéral du composant (A) au composant (B) vaut de 0,004:1 à 0,05:1, (ii) le rapport pondéral de la fraction de composant (B) contenant des groupes amino primaires et/ou secondaires au composant (A) vaut au moins 2:1, et (iii) le mélange réactionnel ne contient pas de polymère ou de copolymère d'un ou plusieurs monomères à insaturation oléfinique, présentant une masse moléculaire valant de 200 à 50.000.

**7.** Procédé conforme à la revendication 6, dans lequel le composant (A) est un sel de zinc, calcium, magnésium, cuivre ou nickel d'un acide carboxylique aliphatique choisi parmi l'acide stéarique, l'acide oléique, l'acide palmitique, l'acide laurique et les sarcosinates de ces acides.

**8.** Procédé conforme à la revendication 7, dans lequel le composant (B) comprend un polyéther-polyol ou un polyester-polyol présentant un poids moyen d'équivalent hydrogène total compris entre 500 et 5000.

**9.** Procédé conforme à la revendication 6, dans lequel la composition contenant de l'hydrogène actif est constituée de

(A) 93 parties en poids d'un polyéther-polyol qui est le produit de réaction du glycérol et de l'oxyde de propylène, coiffé avec 18 % en poids d'oxyde d'éthylène, qui présente un poids d'équivalent hydroxyle de 1635 et dans lequel environ 75 % des groupes hydroxyle sont des groupes hydroxyle de fonction alcool primaire,

(B) 7 parties en poids d'un polyoxypropylène-glycol aminé représenté par la formule

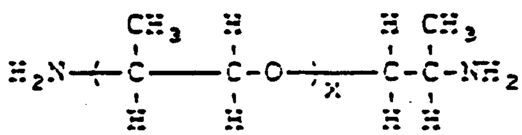

dans laquelle x vaut 5,6, ce corps présentant un poids moyen d'équivalent hydrogène de fonction amine de 100,

(C) 18 parties en poids de diéthyltoluènediamine, et

(D) 0,5 à 6 parties de stéarate de zinc.

**10.** Procédé conforme à la revendication 6, dans lequel la composition contenant de l'hydrogène actif est constituée de

(A) 50 parties en poids d'un polyoxypropylènetriol dont la masse moléculaire vaut 5000 et qui a subi une amination jusqu'à un degré d'environ 80 %,

(B) 46,5 parties en poids d'un polyéther-polyol qui est le produit de réaction du glycérol et de l'oxyde de propylène, coiffé avec 18 % en poids d'oxyde d'éthylène, qui présente un poids d'équivalent hydroxyle de 1635 et dans lequel environ 75 % des groupes hydroxyle sont des groupes hydroxyle de fonction alcool primaire,

(C) 3,5 parties en poids d'un polyoxypropylèneglycol aminé représenté par la formule

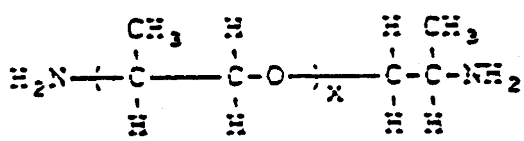

dans laquelle x vaut 5,6, ce corps présentant un poids moyen d'équivalent hydrogène de fonction

amine de 100,
(D) 18 parties en poids de diéthyltoluènediamine,
(E) 2 parties de stéarate de zinc,
(F) 0,05 % en poids de dilaurate de dibutyl-étain et 0,05 % en poids d'une solution à 33 % de triéthylènediamine dans du dipropylèneglycol.

**11.** Procédé conforme à la revendication 6, dans lequel le composant (C) est présent.